(19) Europäisches Patentamt
European Patent Office
Office européen des brevets

(11) EP 4 480 975 A1

(12) **EUROPEAN PATENT APPLICATION**
published in accordance with Art. 153(4) EPC

(43) Date of publication:
**25.12.2024 Bulletin 2024/52**

(21) Application number: **22926081.5**

(22) Date of filing: **12.12.2022**

(51) International Patent Classification (IPC):
***C08F 220/10*** *(2006.01)* ***B32B 27/30*** *(2006.01)*

(52) Cooperative Patent Classification (CPC):
**B32B 27/30; C08F 220/10**

(86) International application number:
**PCT/JP2022/045651**

(87) International publication number:
**WO 2023/153067 (17.08.2023 Gazette 2023/33)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.02.2022 JP 2022020653**

(71) Applicant: **Mitsubishi Chemical Corporation**
**Tokyo 100-8251 (JP)**

(72) Inventors:
- **TOMINAGA Masato**
  **Tokyo 100-8251 (JP)**
- **MIYACHI Akira**
  **Tokyo 100-8251 (JP)**
- **SHIBATA Masashi**
  **Tokyo 100-8251 (JP)**
- **KOBAYASHI Takao**
  **Tokyo 100-8251 (JP)**

(74) Representative: **Vossius & Partner Patentanwälte Rechtsanwälte mbB**
**Siebertstrasse 3**
**81675 München (DE)**

# (54) CURABLE COMPOSITION, CURED PRODUCT, LAMINATE, AND METHODS FOR PRODUCING THESE

(57) The present invention provides a curable composition which provides a coating film having excellent hot water-resistant adhesiveness, a cured product of the curable composition, a laminate using the curable composition, and production methods thereof.

The curable composition of the present invention comprises the following compound A and the following compound B.
Compound A: a compound in which $(TI)_2$ calculated by the following expression (L) is 3.65 to 9.17 (excluding the compound B)
Compound B: a polyfunctional (meth)acrylate monomer having three or more (meth)acryloyl groups

$$(TI)_2 = 4/(N \times \chi_2) \text{ ... Expression (L)}$$

N: a number of atoms in a skeleton of the compound A, excluding hydrogen atoms
$\chi_2$: a second smallest value among eigenvalues of a Laplacian matrix representing a molecular structure of the compound A

EP 4 480 975 A1

## Description

[Technical Field]

The present invention relates to a curable composition, a cured product, a laminate, and production methods thereof.

Priority is claimed on Japanese Patent Application No. 2022-20653, filed February 14, 2022, the content of which is incorporated herein by reference.

[Background Art]

A resin molded product produced from a poly(methyl methacrylate) resin, a polymethacrylimide resin, a polycarbonate resin, a polystyrene resin, an acrylonitrile-styrene resin, or the like is lightweight and has excellent transparency in addition to impact resistance. The resin molded product is used, for example, as a member such as various lamp lenses for automobiles, glazing, and covers for instruments. In particular, for a headlamp lens for an automobile, the resin molded product is often used in order to cope with weight reduction and diversification of design of the automobile.

However, since the resin molded product has insufficient abrasion resistance, a surface thereof is easily damaged by contact with a hard object, friction, scratching, and the like. Damage to the surface of the resin molded product reduces the commercial value thereof. In addition, in the member for the automobile, weather resistance is also important.

For example, a polycarbonate resin is widely used as one of engineering plastics having extremely excellent transparency, moldability, heat resistance, and impact resistance. In an automobile application, the polycarbonate resin is used as a material for a headlamp lens, a tail lamp, a side cover lamp, a glazing, and the like.

However, since the polycarbonate resin has insufficient abrasion resistance, the surface is likely to be scratched. In addition, since weather resistance is lower than that of other engineering plastics, significant yellowing and surface cracks may occur due to ultraviolet rays.

By forming a coating film of a coating agent on the surface of the resin molded product, the abrasion resistance and weather resistance may be imparted. Such a coating agent often comprises an additive for improving adhesiveness to a base material. The fact that the coating agent exhibits excellent adhesiveness to the base material even after various long-term durability tests contributes to longer life of the base material, such as the abrasion resistance and the weather resistance.

For example, in Patent Documents 1 to 3, a coating agent composition aimed at improving the adhesiveness has been studied. Patent Document 1 proposes the use of dimethylformamide. In addition, Patent Document 2 proposes the use of dimethylformamide, N-methylpyrrolidone, cyclohexanone, and methyl cellosolve acetate. In addition, Patent Document 3 proposes the use of (meth)acrylate having a cyclic ether structure.

[Citation List]

[Patent Documents]

[Patent Document 1]
Japanese Unexamined Patent Application, First Publication No. H09-302268
[Patent Document 2]
Japanese Unexamined Patent Application, First Publication No. H10-7939
[Patent Document 3]
Japanese Unexamined Patent Application, First Publication No. 2017-8200


[Summary of Invention]

[Technical Problem]

However, in a coating film obtained by curing the compositions of Patent Documents 1 to 3, adhesiveness to a base material when being immersed in hot water, that is, hot water-resistant adhesiveness is insufficient.

The present invention provides a curable composition which provides a coating film having excellent hot water-resistant adhesiveness, a cured product of the curable composition, a laminate using the curable composition, and

production methods thereof.

[Solution to Problem]

The present invention has the following aspects.

[1] A curable composition comprising:

the following compound A; and
the following compound B,
compound A: a compound in which a second Mohar index calculated by the following expression (L) is 3.65 to 9.17 (excluding the compound B),
compound B: a polyfunctional (meth)acrylate monomer having three or more (meth)acryloyl groups,

$$(TI)_2 = 4/(N \times \chi_2) \ldots \text{expression (L)},$$

in the expression (L), $(TI)_2$ is the second Mohar index,
N is a number of atoms in a skeleton of the compound A, excluding hydrogen atoms,
$\chi_2$ is a second smallest value among eigenvalues of a Laplacian matrix representing a molecular structure of the compound A,
the Laplacian matrix is a square matrix with N rows and N columns,
a value of a k-th diagonal component (k, k) from the left in the Laplacian matrix is a number of atoms bonded to a k-th atom $Z_k$ in the skeleton of the compound A, excluding hydrogen atoms,
a value of each column of a k-th component (k, j) in a component (i, j) of an i row and a j column of a non-diagonal component in the Laplacian matrix is -1 when a j-th atom $Z_j$ in the skeleton of the compound A, excluding the hydrogen atoms, is bonded to the atom $Z_k$, and is 0 when the atom $Z_j$ is not bonded to the atom $Z_k$,
a component sum of each row and a component sum of each column in the Laplacian matrix are 0,
N is an integer of 2 or more,
i, j, and k are an integer of 1 to N, and
i and j are different from each other.

[2] The curable composition according to [1], further comprising:

the following compound B-1,
compound B-1: (meth)acrylate which has at least one selected from the group consisting of a dendrimer structure and a hyperbranched structure (excluding the compound B).

[3] The curable composition according to [1] or [2],
wherein a viscosity of the curable composition at 25°C is 250 mPa·s or less.
[4] A cured product of the curable composition according to any one of [1] to [3].
[5] A laminate comprising:

a base material; and
a layer formed of the cured product according to [4].

[6] The laminate according to [5],
wherein the base material is a plastic base material.
[7] A method for producing a curable composition, comprising:

mixing, with the following compound B, a compound A selected as a compound in which a second Mohar index calculated by the following expression (L) is 3.65 to 9.17 (excluding the compound B),
compound B: a polyfunctional (meth)acrylate monomer having three or more (meth)acryloyl groups,

$$(TI)_2 = 4/(N \times \chi_2) \ldots \text{expression (L)},$$

in the expression (L), $(TI)_2$ is the second Mohar index,
N is a number of atoms in a skeleton of the compound A, excluding hydrogen atoms,

$\chi_2$ is a second smallest value among eigenvalues of a Laplacian matrix representing a molecular structure of the compound A,
the Laplacian matrix is a square matrix with N rows and N columns,
a value of a k-th diagonal component (k, k) from the left in the Laplacian matrix is a number of atoms bonded to a k-th atom $Z_k$ in the skeleton of the compound A, excluding hydrogen atoms,
a value of each column of a k-th component (k, j) in a component (i, j) of an i row and a j column of a non-diagonal component in the Laplacian matrix is -1 when a j-th atom $Z_j$ in the skeleton of the compound A, excluding the hydrogen atoms, is bonded to the atom $Z_k$, and is 0 when the atom $Z_j$ is not bonded to the atom $Z_k$,
a component sum of each row and a component sum of each column in the Laplacian matrix are 0,
N is an integer of 2 or more,
i, j, and k are an integer of 1 to N, and
i and j are different from each other.

[8] The production method according to [7], further comprising:

mixing the following compound B-1,
compound B-1: (meth)acrylate which has at least one selected from the group consisting of a dendrimer structure and a hyperbranched structure (excluding the compound B).

[9] A method for producing a cured product, comprising:
curing a curable composition obtained by the production method according to [7] or [8].
[10] A method for producing a laminate which comprises a base material and a layer formed of a cured product, comprising:
curing a curable composition obtained by the production method according to [7] or [8] to obtain the cured product.
[11] The production method according to [10],
wherein the base material is a plastic base material.

[Advantageous Effects of Invention]

With the curable composition according to the embodiment of the present invention, a coating film having excellent hot water-resistant adhesiveness can be obtained.
The cured product according to the embodiment of the present invention has excellent hot water-resistant adhesiveness.
The laminate according to the embodiment of the present invention comprises a layer formed of a cured product having excellent hot water-resistant adhesiveness.
With the method for producing a curable composition according to the embodiment of the present invention, a curable composition having excellent hot water-resistant adhesiveness as a coating film can be obtained.
With the method for producing a cured product according to the embodiment of the present invention, a cured product having excellent hot water-resistant adhesiveness can be obtained.
With the method for producing a laminate according to the embodiment of the present invention, a laminate comprising a layer formed of a cured product having excellent hot water-resistant adhesiveness can be obtained.

[Description of Embodiments]

Meanings of terms are as follows.
"(Meth)acrylic" is a general term for "acrylic" and "methacrylic".
"(Meth)acryloyl" is a general term for "acryloyl" and "methacryloyl".
"(Meth)acrylate" is a general term for "acrylate" and "methacrylate".
"Number of (meth)acryloyl group-functional groups" means the number of (meth)acryloyl groups included in one molecule of (meth)acrylate.
"to" indicating a numerical range means that the numerical values described before and after "to" are included as the lower limit value and the upper limit value. The numerical value range described in the present specification can be any numerical value range of any combination of the lower limit value and the upper limit value thereof.

<Curable composition>

The curable composition according to the embodiment of the present invention comprises the following compound A and the following compound B.

Compound A: a compound in which a second Mohar index calculated by a specific expression is 3.65 to 9.17 (excluding the compound B)
Compound B: a polyfunctional (meth)acrylate monomer having three or more (meth)acryloyl groups

Hereinafter, the curable composition according to the embodiment is described below in the following order of the compound A and the compound B. Thereafter, components which can constitute the curable composition other than these compounds, the formulation of the curable composition, and properties thereof is described below.

(Compound A)

The compound A is a compound in which a second Mohar index calculated by the following expression (L) is 3.65 to 9.17 (excluding the compound B described later).

$$(TI)_2 = 4/(N \times \chi_2) \text{ ... Expression (L)}$$

In the expression (L), $(TI)_2$ is the second Mohar index.
In the expression (L), N is the number of atoms in a skeleton of the compound A, excluding hydrogen atoms.
In the present specification, the "skeleton of a compound" refers to a moiety obtained by removing hydrogen atoms from constituent atoms of a molecule in a chemical structural formula of the compound.
A bond between atoms in the skeleton is typically a covalent bond, but may be any chemical bond such as a hydrogen bond, an ionic bond, and a metal bond. With regard to the covalent bond, a bond between atoms in the skeleton may be a single bond, a double bond, or a triple bond.
The atoms constituting the skeleton of the compound may be atoms other than hydrogen atoms, and are not particularly limited. In one embodiment, the atoms constituting the skeleton of the compound A are typically carbon atoms. However, the atoms constituting the skeleton of the compound A are not limited to the carbon atoms. The atoms constituting the skeleton of the compound A may be various heteroatoms such as an oxygen atom, a nitrogen atom, a sulfur atom, a phosphorus atom, a boron atom, a silicon atom, and a halogen atom. The number of these heteroatoms is counted in the same manner as the number of carbon atoms and included in the number of atoms in the skeleton of the compound.
Several examples of a method of counting the number of atoms in the skeleton of the compound is described below.
With regard to an aliphatic hydrocarbon or an aromatic hydrocarbon, the number of atoms in the skeleton is counted as the number of atoms in the moiety excluding hydrogen atoms. When some or all of hydrogen atoms are substituted with halogen atoms, the number of atoms of the halogen atoms is counted as the number of atoms in the skeleton. For example, with regard to hexane or cyclohexane, the number of atoms in the skeleton is 6, and with regard to chlorobenzene, the number of atoms in the skeleton is 7. With regard to 2,4-dimethylhexane, the number of atoms in the skeleton is 8.
The oxygen atom is counted as the number of atoms in the skeleton.
An oxygen atom of an ether group (-O-) is counted as the number of atoms in the skeleton. For example, with regard to dimethyl ether ($CH_3OCH_3$), the number of atoms in the skeleton is 3.
An oxygen atom of a hydroxyl group (-OH) is counted as the number of atoms in the skeleton, and a hydrogen atom of the hydroxyl group (-OH) is not counted as the number of atoms in the skeleton. For example, with regard to 1-propanol ($CH_3CH_2CH_2OH$), the number of atoms in the skeleton is 4. With regard to 1,2-butanediol ($CH_3CH_2CH(OH)CH_2OH$), the number of atoms in the skeleton is 6.
An oxygen atom and a carbon atom of an aldehyde group (C(=O)H) are counted as the number of atoms in the skeleton, and a hydrogen atom of the aldehyde group (C(=O)H) is not counted as the number of atoms in the skeleton. For example, with regard to acetaldehyde ($CH_3C(=O)H$), the number of atoms in the skeleton is 3.
An oxygen atom and a carbon atom of a ketone group (C(=O)) are counted as the number of atoms in the skeleton. For example, with regard to 2-butanone ($CH_3C(=O)CH_2CH_3$), the number of atoms in the skeleton is 5.
A carbon atom and two oxygen atoms of a carboxyl group (C(=O)OH) are counted as the number of atoms in the skeleton, and a hydrogen atom of the carboxyl group (C(=O)OH) is not counted as the number of atoms in the skeleton. For

example, with regard to acetic acid ($CH_3C(=O)OH$), the number of atoms in the skeleton is 4. With regard to dichloroacetic acid ($CHCl_2C(=O)OH$), the number of atoms in the skeleton is 6.

The nitrogen atom is counted as the number of atoms in the skeleton.

For example, with regard to ethylenediamine ($H_2NCH_2CH_2NH_2$), the number of atoms in the skeleton is 4.

A nitrogen atom, a carbon atom, and an oxygen atom of an amide group are counted as the number of atoms in the skeleton. For example, with regard to acetamide ($CH_3CONH_2$), the number of atoms in the skeleton is 4.

The sulfur atom is counted as the number of atoms in the skeleton.

For example, with regard to methanethiol ($CH_3SH$), the number of atoms in the skeleton is 2.

A sulfur atom and three oxygen atoms of a sulfonic acid group ($-SO_3H$) are counted as the number of atoms in the skeleton, and a hydrogen atom of the sulfonic acid group ($-SO_3H$) is not counted as the number of atoms in the skeleton. For example, with regard to methanesulfonic acid ($CH_3SO_3H$), the number of atoms in the skeleton is 5.

The boron atom is counted as the number of atoms in the skeleton.

For example, with regard to diborane ($B_2H_6$), the number of atoms in the skeleton is 2.

A boron atom and two oxygen atoms of a borate group ($-B(OH)_2$) are counted as the number of atoms in the skeleton, and a hydrogen atom of the borate group ($-B(OH)_2$) is not counted as the number of atoms in the skeleton. For example, with regard to methylboronic acid ($CH_3B(OH)_2$), the number of atoms in the skeleton is 4.

The silicon atom is counted as the number of atoms in the skeleton.

For example, with regard to tetramethylsilane ($Si(CH_3)_4$), the number of atoms in the skeleton is 5.

A silicon atom and an oxygen atom of a silanol group (-SiOH) are counted as the number of atoms in the skeleton, and a hydrogen atom of the silanol group (-SiOH) is not counted as the number of atoms in the skeleton. For example, with regard to trimethylsilanol ($(CH_3)_3SiOH$), the number of atoms in the skeleton is 5.

The halogen atom is counted as the number of atoms in the skeleton.

For example, with regard to chloroform ($CHCl_3$), the number of atoms in the skeleton is 4.

In the curable composition according to the embodiment, the number of atoms in the skeleton of the compound A, excluding hydrogen atoms, that is, N is an integer of 2 or more. In consideration of the fact that the second Mohar index of the compound A is in the range of 3.65 to 9.17, the value of N as the number of atoms in the skeleton of the compound A, excluding hydrogen atoms, is preferably 2 to 50, more preferably 5 to 40, still more preferably 10 to 30, even more preferably 13 to 20, even still more preferably 14 to 19, and further more preferably 15 to 18.

In the expression (L), $\chi_2$ is a second smallest value among eigenvalues of a Laplacian matrix representing a molecular structure of the compound A. The Laplacian matrix representing the molecular structure of the compound A is a Laplacian matrix representing a chemical structure of the compound in graph theory.

When describing the molecular structure of the compound using the graph theory, the atom constituting the skeleton of the compound corresponds to a node of the graph theory. In addition, a chemical bond between the atoms corresponds to an edge of the graph theory.

The graph theory and the Laplacian matrix of the compound are described in detail in the following references. The contents of the following references are incorporated in the present specification by reference.

Reference: The Laplacian Matrix in Chemistry, Nenad Trinajstic, Journal of Chemical Information and Computer Sciences, American Chemical Society, 1994, vol. 34, issue 2, pp. 368 to 376

The Laplacian matrix used for the calculation of $\chi_2$ of the compound A is a square matrix with N rows and N columns. A value of a k-th diagonal component (k, k) from the left in the Laplacian matrix is the number of atoms bonded to a k-th atom $Z_k$ in the skeleton of the compound A, excluding hydrogen atoms.

Here, the k-th atom $Z_k$ in the skeleton of the compound is determined based on a locant determined in accordance with the IUPAC nomenclature. The locant is a number determined in order from 1 in accordance with the priority of the structure in the skeleton and the priority of the functional group. An atom at which the locant is k is the k-th atom $Z_k$ of the skeleton. k is an integer of 1 to N.

With regard to a chain-like compound, the atom $Z_k$ is a k-th atom counted from the terminal of the skeleton. In addition, with regard to a cyclic compound, the atom $Z_k$ is an atom at which the locant is k, that is, a k-th atom counted from the first atom of the locant.

With regard to a compound having a branched structure, the atom $Z_k$ is determined by also counting atoms in the skeleton of the branched chain-like portion in order of the locant.

A non-diagonal component of the Laplacian matrix is described below.

A value of each column of a k-th component (k, j) in a component (i, j) of an i row and a j column of a non-diagonal component in the Laplacian matrix is -1 when a j-th atom $Z_j$ in the skeleton of the compound A is bonded to the k-th atom $Z_k$. On the other hand, the value of each column of the k-th component (k, j) is 0 when the atom $Z_j$ is not bonded to the atom $Z_k$. i and j are an integer of 1 to N, and i and j are different from each other. This is because the component (i, j) is a matrix element of the non-diagonal component.

Here, the j-th atom $Z_j$ in the skeleton of the compound A is determined based on the locant determined in accordance with the IUPAC nomenclature, the same as the atom $Z_k$. An atom at which the locant is j is the j-th atom $Z_j$ in the

skeleton of the compound A.

Since k is an integer of 1 to N, the component (i, j) can be determined by determining the value of each column of the component (k, j) in order of the first row, the second row, ..., the k-th row, ..., and the N-th row.

Since the Laplacian matrix of the compound A is a square matrix, when determining the component (i, j), the value of each row of the k-th column component (i, k) may be determined in order of the first column, the second column, ..., the k-th column, ..., and the N-th column. That is, the component (i, k) may be determined by setting the value of each row of the k-th column component (i, k) to be -1 when an i-th atom $Z_i$ in the skeleton of the compound A is bonded to the k-th atom $Z_k$, and to be 0 when the atom $Z_i$ is not bonded to the atom $Z_k$. In this way, the obtained Laplacian matrix is the same.

As described above, in the Laplacian matrix of the compound A in which the diagonal component (k, k) and the component (i, j) are determined, the component sum of each row and the component sum of each column are 0. The diagonal component (k, k) indicates the information on the number of bonding atoms in each atom in the skeleton of the compound A. On the other hand, the k-th row component (k, j) and the k-th column component (i, k) in the component (i, j) indicate the presence or absence of a bond to the atom $Z_k$ in the atom $Z_j$ and the atom $Z_i$ of the compound A. As a result, the k-th row component (k, j) and the k-th column component (i, k) in the component (i, j) indicate the position information of the bond with the k-th atom $Z_k$ in the Laplacian matrix.

The Laplacian matrix used for the calculation of $\chi_2$ of the compound A is a square matrix with N rows and N columns. An eigenvalue of the Laplacian matrix is obtained as a solution of the characteristic equation.

The solution of the characteristic equation requires more complicated computation as the degree of the matrix increases. Therefore, it is preferable to use a calculation site on the Internet (for example, https://keisan.casio.jp/exec/system/1505174268). In addition to the calculation site, a computer or calculation software capable of executing a calculation program for obtaining the solution of the characteristic equation may be used.

For example, when a molecular structure of 2,4-dimethylhexane is described by the Laplacian matrix of the graph theory, the following 8-row 8-column square matrix is obtained.

$$\begin{pmatrix} 1 & -1 & 0 & 0 & 0 & 0 & 0 & 0 \\ -1 & 3 & -1 & 0 & 0 & 0 & -1 & 0 \\ 0 & -1 & 2 & -1 & 0 & 0 & 0 & 0 \\ 0 & 0 & -1 & 3 & -1 & 0 & 0 & -1 \\ 0 & 0 & 0 & -1 & 2 & -1 & 0 & 0 \\ 0 & 0 & 0 & 0 & -1 & 1 & 0 & 0 \\ 0 & -1 & 0 & 0 & 0 & 0 & 1 & 0 \\ 0 & 0 & 0 & -1 & 0 & 0 & 0 & 1 \end{pmatrix}$$

When determining the Laplacian matrix of 2,4-dimethylhexane, constituent atoms in the skeleton are numbered in accordance with the locant as follows.

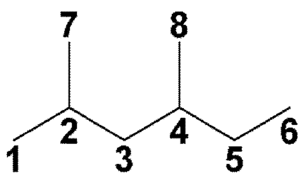

The second smallest eigenvalue $\chi_2$ of the Laplacian matrix when describing 2,4-dimethylhexane by the graph theory is 0.2137. In addition, the number of atoms in the skeleton of 2,4-dimethylhexane is 8.

Therefore, the second Mohar index of 2,4-dimethylhexane is calculated from the above expression (L) as follows.

$$(TI)_2 = 4/(N \times \chi_2) = 4/(8 \times 0.2137) \approx 2.34$$

In general, as the second Mohar index of a certain compound becomes smaller, the number of atoms constituting the skeleton of the compound tends to become larger. In addition, the structure tends to have a large number of branched structures and a bulky structure. On the other hand, as the second Mohar index becomes larger, the number of atoms

constituting the skeleton of the compound tends to become smaller. In addition, the structure tends to have a linear structure with few branched structures.

In the curable composition according to the embodiment, the second Mohar index of the compound A is 3.65 to 9.17. Since the second Mohar index of the compound A is within the above-described numerical range, it is considered that the hot water-resistant adhesiveness and the heat moisture-resistant adhesiveness of the coating film obtained from the curable composition are improved. The detailed mechanism is not clear, but is presumed as follows.

Since the second Mohar index of the compound A is 3.65 to 9.17, the molecular skeleton of the compound A is moderately elongated and bulky. The compound A having such a molecular skeleton exhibits moderate affinity for a base material, and the compound A easily permeates into the inside of the base material and swells. Therefore, it is considered that a contact surface area between the cured coating film and the interface of the base material is remarkably increased. As a result of the increase in contact surface area, an anchor effect of the contact interface is easily obtained, so that an adhesion force based on van der Waals force, hydrogen bonding force, or the like is increased. Therefore, it is presumed that the hot water-resistant adhesiveness and the heat moisture-resistant adhesiveness of the coating film obtained from the curable composition are improved.

As described above, in the compound A in which the second Mohar index is 3.65 to 9.17, it is considered that, when used as a coating film of a cured product, an adhesive interface with a large surface area is easily formed at the interface with the base material. Accordingly, the hot water-resistant adhesiveness and the heat moisture-resistant adhesiveness of the coating film are improved, and functional coating on the surface of the base material can be maintained for a long period of time.

In a case where the second Mohar index of the compound A is a value larger than 3.65, the number of branches in the molecular skeleton is not too large, and a bulky substituent is also reduced. Therefore, it is considered that a cross-sectional area of the molecule is less likely to be excessively increased, and the compound A easily permeates into the inside of the base material and swells.

In a case where the second Mohar index of the compound A is a value smaller than 9.17, a chain-like portion of the molecular skeleton is less likely to be excessively long. Therefore, self-associativity between the compounds A is weak, and affinity with the base material molecule is easily expressed. As a result, it is considered that the compound A easily permeates into the inside of the base material and swells.

From the above viewpoints, the second Mohar index of the compound A is preferably 4.00 to 8.50, more preferably 4.05 to 7.39, still more preferably 4.10 to 7.29, even more preferably 4.50 to 7.13, even still more preferably 5.00 to 6.71, particularly preferably 5.20 to 6.06, and most preferably 5.30 to 5.55.

The compound A may be used alone, or in combination of two or more kinds of compounds A having different second Mohar indices.

As a result of further various studies, the present inventor has found a preferred molecular weight condition of the compound A. A molecular weight of the compound A is preferably 160 to 305, more preferably 170 to 275, still more preferably 175 to 250, particularly preferably 190 to 240, and most preferably 205 to 230.

Although the reason why these numerical ranges are preferable is not clear, it is presumed as follows.

It is considered that, when the molecular weight is within the above-described numerical range, a balance between the behavior of dissolving or eluting the base material and the permeability into the inside of the base material is improved. When the molecular weight is 160 or more, it is presumed that the behavior of dissolving or eluting the base material due to diffusion is less likely to occur, and an interface is likely to be formed between the cured product having a large surface area and the base material. On the other hand, when the molecular weight is 305 or less, it is presumed that a molecular size is not excessively large and the permeability into the inside of the base material is easily maintained.

The compound A may have various heteroatoms such as an oxygen atom, a nitrogen atom, a sulfur atom, a phosphorus atom, a boron atom, a silicon atom, and a halogen atom.

Examples of the compound A having an oxygen atom include ether, ketone, carboxylic acid, ester including a (meth)acrylate monomer or an acetate monomer, and carbonate.

Examples of the compound A having a nitrogen atom include an amino, an amide including an acrylamide monomer, an amine, and a semi-polar compound including an amine oxide.

Examples of the compound A having a sulfur atom include an amphoteric compound including a thiol, a thioester, a sulfonic acid, or a sulfobetaine.

Examples of the compound A having a phosphorus atom include an amphoteric compound including phosphoric acid, a phosphoric acid ester, or phosphobetaine.

Examples of the compound A having a boron atom include borane, boric acid, and boric acid ester.

Examples of the compound A having a silicon atom include silane, siloxane, and silanol.

Examples of the compound A having a halogen atom include a halogenated alkane, a halogenated alkene, and a halogenated alkyne.

The compound A may be a chain-like compound having a linear or branched chain-like structure, a ring compound having a cyclic structure, or a compound having both the chain-like structure and the cyclic structure. In

addition, some bonds constituting the compound A may be an unsaturated bond, and all the bonds may be saturated bonds.

The cyclic structure may be an aliphatic ring, an aromatic ring, a non-aromatic heterocyclic ring, or an aromatic heterocyclic ring. In addition, the cyclic structure may be a monocyclic structure or a polycyclic structure having two or more rings. Among these, particularly from the viewpoint of weather resistance, an aliphatic ring or a non-aromatic heterocyclic ring is more preferable, and an aliphatic ring is still more preferable.

The alicyclic ring is a monocyclic ring or a polycyclic ring having two or more rings. Some bonds constituting the aliphatic ring may be an unsaturated bond. A part of the aliphatic ring having two rings may have aromaticity. Examples of the aliphatic ring include cycloalkane, cycloalkene, cycloalkyne, bicycloalkane, and tricycloalkane.

The aromatic ring is an aromatic monocyclic ring or an aromatic polycyclic ring having two or more rings. Examples of the aromatic ring include a benzene ring and a naphthalene ring.

The non-aromatic heterocyclic ring is a monocyclic ring or a polycyclic ring having two or more rings, which has one to four same or different heteroatoms selected from the group consisting of a nitrogen atom, an oxygen atom, and a sulfur atom. Some bonds constituting the non-aromatic heterocyclic ring may be an unsaturated bond. A part of the non-aromatic heterocyclic ring having two rings may have aromaticity. Examples of the non-aromatic heterocyclic group include aziridinyl, azetidinyl, pyrrolidinyl, piperidinyl, dihydropyridyl, oxetanyl, tetrahydrofuryl, dihydrofuryl, tetrahydropyranyl, dihydropyranyl, tetrahydrothienyl, tetrahydrothiopyranyl, dihydrothiopyranyl, piperazinyl, dihydropyrazyl, morpholinyl, thiomorpholinyl, dihydroindolyl, dihydroisoindolyl, dihydrobenzofuryl, dihydroisobenzofuryl, tetrahydrobenzoxazolyl, dihydrofuropyridyl, dihydropyrazolomorpholinyl, pyridinodioxanyl, dihydroazabenzofuranyl, dihydroazaibenzofuranyl, and dihydroazaindolyl.

The non-aromatic heterocyclic ring may be cyclic amino. The "cyclic amino" has a bonding site on a nitrogen atom forming a ring structure of the non-aromatic heterocyclic ring. Examples of the cyclic amino include azetidin-1-yl, pyrrolidin-1-yl, piperidin-1-yl, morpholin-4-yl, thiomorpholin-4-yl, and piperazin-1-yl.

The aromatic heterocyclic ring is a monocyclic ring or a polycyclic ring having two or more rings, which has aromaticity and has one to four same or different heteroatoms selected from the group consisting of a nitrogen atom, an oxygen atom, and a sulfur atom. Examples of the aromatic heterocyclic group include pyrrolyl, furyl, thienyl, pyrazolyl, imidazolyl, oxazolyl, thiazolyl, pyridyl, pyridazinyl, pyrimidinyl, pyrazyl, indolyl, isoindolyl, benzofuryl, benzothienyl, indazolyl, benzimidazolyl, benzoxazolyl, benzothiazolyl, quinolyl, isoquinolyl, cinnolinyl, quinazolinyl, quinoxalyl, pyrrolopyridyl, and imidazolopyridyl.

As the compound A, an acetate or a (meth)acrylate monomer is preferable.

Examples of the acetate include methyl carbitol acetate, ethyl carbitol acetate, propyl carbitol acetate, butyl carbitol acetate, pentyl carbitol acetate, hexyl carbitol acetate, heptyl carbitol acetate, and octyl carbitol acetate. However, the acetate is not limited to these examples.

Examples of the (meth)acrylate monomer include methoxyethoxyethyl acrylate, ethoxyethoxyethyl acrylate, propoxyethoxyethyl acrylate, butoxyethoxyethyl acrylate, pentoxyethoxyethyl acrylate, hexyloxyethoxyethyl acrylate, heptoxyethoxyethyl acrylate, octoxyethoxyethyl acrylate, caprolactone-modified (1 mol) ethyl acrylate, caprolactone-modified (2 mol) ethyl acrylate, methoxy-triethylene glycol acrylate, ethoxy-triethylene glycol acrylate, propoxy-triethylene glycol acrylate, butoxy-triethylene glycol acrylate, pentoxy-triethylene glycol acrylate, hexyloxy-triethylene glycol acrylate, heptoxy-triethylene glycol acrylate, octoxy-triethylene glycol acrylate, 2-acryloyloxyethylethyl carbonate, 2-acryloyloxyethylpropyl carbonate, 2-acryloyloxyethylbutyl carbonate, 4-acryloyloxybutylethyl carbonate, 4-acryloyloxybutylpropyl carbonate, 4-acryloyloxybutylbutyl carbonate, 1,4-butanediol diacrylate, 1,5-pentanediol diacrylate, 1,6-hexanediol diacrylate, 1,7-heptanediol diacrylate, 1,8-octanediol diacrylate, 1,9-nonanediol diacrylate, and dimethylol-tricyclodecanediol acrylate. However, the (meth)acrylate monomer is not limited to these examples.

Among these, from the viewpoint of linearity of the molecular structure, the compound A preferably comprises at most two substituents having polymerization activity.

For example, ethyl carbitol acetate, butyl carbitol acetate, ethoxyethoxyethyl acrylate, butoxyethoxyethyl acrylate, hexyloxyethoxyethyl acrylate, caprolactone-modified (1 mol) ethyl acrylate, methoxy-triethylene glycol acrylate, butoxy-triethylene glycol acrylate, 4-acryloyloxybutylethyl carbonate, 4-acryloyloxybutylbutyl carbonates, 1,4-butanediol diacrylate, 1,6-hexanediol diacrylate, 1,9-nonanediol diacrylate, or dimethylol-tricyclodecane diacrylate is preferable.

(Compound B)

The compound B is a polyfunctional (meth)acrylate monomer having three or more (meth)acryloyl groups (excluding a compound C described later).

In a relationship with the compound A, a compound corresponding to the "polyfunctional (meth)acrylate monomer having three or more (meth)acryloyl groups" is used as the compound B even when the second Mohar index is 3.65 to 9.17.

The curable composition according to the embodiment comprises the compound B as one of radically

polymerizable compounds. Since the curable composition comprises the compound B, the curable composition exhibits favorable polymerization activity by irradiation with active energy ray. As a result, the crosslinking density is increased, and abrasion resistance of the coating film is improved.

As the compound B, from the viewpoint of abrasion resistance and weather resistance, a compound which comprises at least three or more polymerizable functional groups in one molecule, which is known in the related art, can be used. Examples thereof include poly(meth)acrylate, polyester poly(meth)acrylate, epoxy poly(meth)acrylate, and poly [(meth)acryloyloxyalkyl](iso)cyanurate.

The number of (meth)acryloyl group-functional groups in the compound B is preferably 3 to 20. From the viewpoint of curing properties and abrasion resistance, the number of (meth)acryloyl group-functional groups in the compound B is preferably 4 or more, more preferably 5 or more, and still more preferably 6 or more. In addition, from the viewpoint of weather resistance and curing shrinkage, the number of (meth)acryloyl group-functional groups in the compound B is preferably 18 or less, more preferably 16 or less, and still more preferably 14 or less.

Examples of the compound B include poly[(meth)acryloyloxyalkyl](iso)cyanurate, polyester poly(meth)acrylate, and poly(meth)acrylate.

Examples of the poly[(meth)acryloyloxyalkyl](iso)cyanurate include EO-modified tri(meth)acrylate isocyanurate.

Examples of the polyester poly(meth)acrylate include polyester tri(meth)acrylate, polyester tetra(meth)acrylate, polyester penta(meth)acrylate, and polyester hexa(meth)acrylate.

Examples of the poly(meth)acrylate include glycerin tri(meth)acrylate, glycerin EO-modified tri(meth)acrylate, glycerin PO-modified tri(meth)acrylate, glycerin caprolactone-modified tri(meth)acrylate, trimethylolpropane tri(meth) acrylate, EO-modified trimethylolpropane tri(meth)acrylate, PO-modified trimethylolpropane tri(meth)acrylate, caprolactone-modified trimethylolpropane tri(meth)acrylate, pentaerythritol tri(meth)acrylate, EO-modified pentaerythritol tri(meth)acrylate, PO-modified pentaerythritol tri(meth)acrylate, caprolactone-modified pentaerythritol tri(meth)acrylate, pentaerythritol tetra(meth)acrylate, EO-modified pentaerythritol tetra(meth)acrylate, PO-modified pentaerythritol tetra(meth)acrylate, caprolactone-modified pentaerythritol tetra(meth)acrylate, dipentaerythritol penta(meth)acrylate, EO-modified dipentaerythritol penta(meth)acrylate, PO-modified dipentaerythritol penta(meth)acrylate, caprolactone-modified dipentaerythritol penta(meth)acrylate, dipentaerythritol hexa(meth)acrylate, EO-modified dipentaerythritol hexa(meth)acrylate, PO-modified dipentaerythritol hexa(meth)acrylate, and caprolactone-modified dipentaerythritol hexa(meth)acrylate. "EO" means ethylene oxide, and "PO" means propylene oxide.

The compound B may be used alone or in combination of two or more kinds thereof.

Among these, particularly from the viewpoint of balance between the abrasion resistance and the weather resistance (resistance to yellowing and cracking), as the compound B, EO-modified tri(meth)acrylate isocyanurate, trimethylolpropane tri(meth)acrylate, caprolactone-modified polyfunctional (meth)acrylate, or a polyfunctional (meth) acrylate having a dipentaerythritol skeleton is preferable; and a polyfunctional (meth)acrylate having a caprolactone-modified dipentaerythritol skeleton is more preferable.

<Compound B-1>

It is preferable that the curable composition according to the embodiment further comprises the following compound B-1, in addition to the compound A and the compound B.

Compound B-1: (meth)acrylate which has at least one selected from the group consisting of a dendrimer structure and a hyperbranched structure (excluding the above-described compound B and the compound C described later) In a relationship with the compound A, a compound corresponding to the "(meth)acrylate which has at least one selected from the group consisting of a dendrimer structure and a hyperbranched structure" is used as the compound B-1 even when the second Mohar index is 3.65 to 9.17.

The compound B-1 contributes to improvement of the bending resistance of the cured product of the curable composition according to the embodiment. In addition, the compound B-1 also contributes to reduction of the viscosity of the curable composition according to the embodiment. Therefore, when the present curable composition is applied onto the base material using air spraying, a favorable appearance after coating can be obtained even when the amount of the organic solvent to be diluted is small. Accordingly, a volatile organic compound (VOC) component can be reduced, and an environmental load can be reduced.

The dendrimer structure means a structure in which a branched structure is further branched to form a multi-branched structure, and the branched structure has a radially extending structure.

The hyperbranched structure means a structure in which the above-described multi-branched structure is not radial and extends in a branched manner in one predetermined direction or two or more directions.

The compound B-1 is a polyfunctional (meth)acrylate having a (meth)acryloyl group at a plurality of end portions of the above-described multi-branched structure.

From the viewpoint of curing properties, the number of (meth)acryloyl group-functional groups in the compound

B-1 is preferably 4 or more and more preferably 6 or more. In addition, from the viewpoint of curing shrinkage, the number of (meth)acryloyl group-functional groups in the compound B-1 is preferably 20 or less and more preferably 18 or less.

The compound B-1 may be used by synthesizing the compound by various methods, or a commercially available product thereof may be used. Examples of the method for synthesizing the compound B-1 include the method described in Japanese Unexamined Patent Application, First Publication No. 2016-190998.

Examples of the (meth)acrylate having a dendrimer structure include VISCOAT (registered trademark) #1000, SIRIUS-501, and SUBARU-501, all of which are manufactured by Osaka Organic Chemical Industry Ltd.

Examples of the (meth)acrylate having a hyperbranched structure include CN2302, CN2303, and CN2304, all of which are manufactured by SARTOMER COMPANY, INC.

From the viewpoint of improving spray coating properties by further lowering the viscosity of the curable composition, as the compound B-1, VISCOAT #1000 manufactured by Osaka Organic Chemical Industry Ltd., or CN2302, CN2303, or CN2304 manufactured by SARTOMER COMPANY, INC. is preferable.

From the viewpoint of spray coating properties, a viscosity of the compound B-1 (25°C) is preferably 10,000 mPa·s or less, more preferably 7,000 mPa·s or less, still more preferably 4,000 mPa·s or less, and even more preferably 2,000 mPa·s or less. In addition, from the viewpoint of curing properties, the viscosity of the compound B-1 (25°C) is preferably 10 mPa - s or more, more preferably 20 mPa-s or more, still more preferably 40 mPa·s or more, and even more preferably 60 mPa·s or more.

The viscosity of the compound B-1 (25°C) is a value measured at 25°C using an E-type viscometer.

(Compound C)

It is preferable that the curable composition according to the embodiment further comprises the following compound C as one of radically polymerizable compounds, in addition to the compound A and the compound B.

Compound C: a (meth)acrylate having a (meth)acryloyl group and a urethane bond

In a relationship with the compound A, a compound corresponding to the "(meth)acrylate having a (meth)acryloyl group and a urethane bond" is used as the compound C even when the second Mohar index is 3.65 to 9.17.

Since the compound C has a urethane bond, toughness of the coating film is improved. In addition, the weather resistance of the cured product of the curable composition and the adhesiveness after a durability test are improved.

As the compound C, a urethane (meth)acrylate having two or more urethane bonds and two or more (meth) acryloyloxy groups in one molecule is preferable.

For example, the following urethane (meth)acrylate (Cl) is preferable.

Urethane (meth)acrylate (C1): a reaction product of a hydroxy group-containing (meth)acrylate (c1), a polyisocyanate (c2), and a polyol (c3) having two or more hydroxy groups in one molecule

The hydroxy group-containing (meth)acrylate (c1) is not particularly limited as long as it is a (meth)acrylate having a hydroxy group and a (meth)acryloyloxy group. Examples thereof include 2-hydroxyethyl acrylate (HEA), 2-hydroxyethyl methacrylate (HEMA), 2-hydroxypropyl acrylate (HPA), 2-hydroxypropyl methacrylate (HPMA), 2-hydroxybutyl acrylate (HBA), 4-hydroxybutyl acrylate (4-HBA), 2-hydroxybutyl methacrylate (HBMA), a caprolactone (1 mol) adduct of HEA (PLACCEL (registered trademark) FA1 manufactured by Daicel Corporation), a caprolactone (2 mol) adduct of HEA (PLACCEL FA2D), a caprolactone (5 mol) adduct of HEA (PLACCEL FA5), a caprolactone (10 mol) adduct of HEA (PLACCEL FA10L), and a compound having a monopentaerythritol or polypentaerythritol skeleton.

Examples of the "compound having a monopentaerythritol or polypentaerythritol skeleton" include pentaerythritol tri(meth)acrylate, dipentaerythritol tri(meth)acrylate, dipentaerythritol tetra(meth)acrylate, and dipentaerythritol penta(meth)acrylate.

The hydroxy group-containing (meth)acrylate (c1) may be used alone or in combination of two or more kinds thereof.

Among the hydroxy group-containing (meth)acrylates (c1), from the viewpoint of availability, reactivity, solubility in the curable composition, and the like, 2-hydroxyethyl acrylate, 2-hydroxypropyl acrylate, 2-hydroxybutyl acrylate, 4-hydroxybutyl acrylate, pentaerythritol triacrylate, a caprolactone (1 mol) adduct of HE A manufactured by DIC Corporation (PLACCEL FA1), or a caprolactone (2 mol) adduct of HEA (PLACCEL FA2D) is preferable; 2-hydroxyethyl acrylate, 2-hydroxypropyl acrylate, or 2-hydroxybutyl acrylate is more preferable; and 2-hydroxyethyl acrylate is still more preferable.

The polyisocyanate (c2) is not particularly limited as long as it is a polyisocyanate having two or more isocyanate groups in one molecule. Examples thereof include aliphatic polyisocyanates such as hexamethylene diisocyanate (HDI), trimethylhexamethylene diisocyanate (TMHDI), and lysine diisocyanate;

alicyclic polyisocyanates such as norbornanediisocyanate (NBDI), trans-cyclohexane-1,4-diisocyanate, isophorone diisocyanate (IPDI), bis(isocyanatomethyl)cyclohexane (hydrogenated XDI), and dicyclohexylmethane diisocyanate (hydrogenated MDI);

aromatic polyisocyanates such as 2,4-tolylene diisocyanate (2,4-TDI), 2,6-tolylene diisocyanate (2,6-TDI), 4,4'-diphenylmethane diisocyanate (4,4'-MDI), 2,4'-diphenylmethane diisocyanate (2,4'-MDI), 1,4-phenylene diisocyanate, polymethylene polyphenylene polyisocyanate, xylylene diisocyanate (XDI), tetramethylxylylene diisocyanate (TMXDI), tolylene diisocyanate (TODI), 1,5-naphthalene diisocyanate (NDI), and triphenylmethane triisocyanate; and

isocyanurate products, adduct products, and biuret products thereof.

The polyisocyanate (c2) may be used alone or in combination of two or more kinds thereof.

From the viewpoint of weather resistance, the polyisocyanate (c2) is preferably an aliphatic polyisocyanate or an alicyclic polyisocyanate; and more preferably hexamethylene diisocyanate (HDI), isophorone diisocyanate (IPDI), bis(isocyanatomethyl)cyclohexane (hydrogenated XDI), dicyclohexylmethane diisocyanate (hydrogenated MDI), an isocyanurate product of hexamethylene diisocyanate (product name: DURANATE TPA-100), an adduct product of hexamethylene diisocyanate (product name: DURANATE P301-75E), a biuret product of hexamethylene diisocyanate (product name: DURANATE 24A-100), or a bifunctional-type hexamethylene diisocyanate (product name: DURANATE A-201H), all of which are manufactured by Asahi Kasei Corporation.

Among these, from the viewpoint of abrasion resistance, an alicyclic polyisocyanate is more preferable, and dicyclohexylmethane diisocyanate (hydrogenated MDI) is still more preferable.

The polyol (c3) is not particularly limited as long as it is a polyol having two or more hydroxy groups in one molecule. Examples thereof include ethylene glycol, propylene glycol, diethylene glycol, butylene glycol, neopentyl glycol, 1,6-hexanediol, 3-methyl-1,5-pentanediol, 3,3'-dimethylolheptane, polyoxyethylene glycol, polyoxypropylene glycol, polyoxybutylene glycol, polycaprolactone polyol (polycaprolactone diol and the like), polytetramethylene ether glycol (PTMG), polycarbonate polyol (polycarbonate diol and the like), and lactone-based polyol (4-hydroxy-N-(2-hydroxyethyl)-N-methylbutyramide obtained by reacting γ-butyrolactone and N-methylethanolamine, and the like).

Among these, from the viewpoint of weather resistance, polycaprolactone polyol, polycarbonate polyol, or lactone-based polyol is preferable, and polycarbonate polyol is more preferable. In addition, from the viewpoint of improving flexibility of the coating film and making it difficult for cracks to occur, polyoxyethylene glycol, polyoxybutylene glycol, or polytetramethylene ether glycol (PTMG) is preferable, and polytetramethylene ether glycol is more preferable.

The polyol (c3) may be used alone or in combination of two or more kinds thereof.

A commercially available product may be used as the polyol (c3).

Examples of a commercially available product of the polycarbonate polyol include KURARAY POLYOL C-590, KURARAY POLYOL C-770, KURARAY POLYOL C-1050, KURARAY POLYOL C-1090, KURARAY POLYOL C1065N, KURARAY POLYOL C-1015N, KURARAY POLYOL C-2090, and KURARAY POLYOL C-3090, all of which are manufactured by KURARAY CO., LTD.;

DURANOL T-5650E, DURANOL T-5650J, DURANOL T-5651, DURANOL T-5652, DURANOL G-4671, DURANOL G-4672, DURANOL G3450J, and DURANOL G3452, all of which are manufactured by Asahi Kasei Corporation; and BENEBiOL NL1010DB, BENEBiOL NL2010DB, BENEBiOL NL3010DB, BENEBiOL NL1005B, BENEBiOL NL2005B, BENEBiOL NL1030B, BENEBiOL HS0830B, BENEBiOL HS0840B, BENEBiOL HS0840H, and BENEBiOL HS0850H, all of which are manufactured by Mitsubishi Chemical Corporation.

Examples of a commercially available product of the polytetramethylene ether glycol include PTMG250, PTMG650, PTMG1000, PTMG2000, and PTMG3000, all of which are manufactured by Mitsubishi Chemical Corporation;

PTMEG#220, PTMEG#650, PTMEG#1000, PTMEG#1400, and PTMEG#2000, all of which are manufactured by MIHAMA; and

PTG-650, PTG-850SN, and PTG-3000, all of which are manufactured by Hodogaya Chemical Co., Ltd.

The urethane (meth)acrylate (C1) is obtained by reacting the hydroxy group-containing (meth)acrylate (c1), the polyisocyanate (c2), and the polyol (c3).

As reaction conditions, conditions under heating are preferable. Examples thereof include a reaction temperature of 70°C and a reaction time of 8 hours.

As the urethane (meth)acrylate (C1), for example, a reaction product of a polycarbonate polyol, a diisocyanate compound having an alicyclic structure, and a mono(meth)acrylate monomer having a hydroxy group, or

a reaction product of a polytetramethylene ether glycol, 4-hydroxy-N-(2-hydroxyethyl)-N-methylbutanamide, a diisocyanate compound having an alicyclic structure, and a mono(meth)acrylate monomer having a hydroxy group is preferable.

From the viewpoint of improving spray coating properties by further lowering the viscosity of the curable composition, a mass-average molecular weight (Mw) of the compound C is preferably 8,000 or less and more preferably 6,000 or less. In addition, from the viewpoint of bending resistance of the cured product, the mass-average molecular weight (Mw) of the compound C is preferably 500 or more and more preferably 1,000 or more.

Therefore, the mass-average molecular weight (Mw) of the compound C is preferably 500 to 8,000 and more preferably 1,000 to 6,000.

The mass-average molecular weight (Mw) of the compound C is a value in terms of standard polystyrene, which is measured by a gel permeation chromatography method (GPC method).

The number of (meth)acryloyl-functional groups in the compound C is preferably 2 to 15, more preferably 2 to 10, still more preferably 2 to 6, particularly preferably 2 to 4, and most preferably 2. When the number of (meth)acryloyl-functional groups in the compound C is within the above-described numerical range, the abrasion resistance and the weather resistance are likely to be compatible.

(Other monomers)

The curable composition according to the embodiment of the present invention may further comprise a compound having a (meth)acryloyl group as other monomers, in addition to the compound A, the compound B, the compound B-1, and the compound C.

The other monomers are not particularly limited. Examples thereof include linear aliphatic hydrocarbon (meth) acrylates, aliphatic hydrocarbon (meth)acrylates having a branched structure, aliphatic hydrocarbon (meth)acrylates having a cyclic structure, and hydroxyl group-containing (meth)acrylates. It is preferable that the other monomers have at least one or more polymerization active groups in the molecular skeleton.

The other monomers may be used alone or in combination of two or more kinds thereof.

From the viewpoint of improving spray coating properties by further lowering the viscosity of the curable composition, as the other monomers, a linear aliphatic hydrocarbon (meth)acrylate, an aliphatic hydrocarbon (meth) acrylate having a branched structure, or an aliphatic hydrocarbon (meth)acrylate having a cyclic structure is preferable. Examples thereof include isobutyl acrylate, t-butyl acrylate, isononyl acrylate, isodecyl acrylate, 2-ethylhexyl acrylate, isostearyl acrylate, and isobornyl acrylate. Among these, from the viewpoint of the viscosity reducing effect, 2-ethylhexyl acrylate or isostearyl acrylate is preferable.

(Other components)

The curable composition may further comprise other components in addition to the compound A, the compound B, the compound B-1, the compound C, and the other monomers.

Examples of the other components include an ultraviolet absorber, a photopolymerization initiator, an organic solvent, and an additive. The other components are not limited to these examples.

In a relationship with the compound A, among the other components exemplified below, a compound having the second Mohar index of 3.65 to 9.17 is the compound A.

The ultraviolet absorber is described below.

The ultraviolet absorber can impart an effect of absorbing ultraviolet rays in sunlight, to the cured product of the curable composition. When the curable composition comprises the ultraviolet absorber, the weather resistance of the cured product of the curable composition is further improved.

The ultraviolet absorber is not particularly limited as long as it can absorb ultraviolet rays. An ultraviolet absorber which can be uniformly dissolved in the curable composition and has high ultraviolet absorbing ability is preferable.

Examples of the ultraviolet absorber include benzophenone-based ultraviolet absorbers such as 2-hydroxybenzophenone, 5-chloro-2-hydroxybenzophenone, 2,4-dihydroxybenzophenone, 2-hydroxy-4-methoxybenzophenone, 2-hydroxy-4-octyloxybenzophenone, 4-dodecyloxy-2-hydroxybenzophenone, 2-hydroxy-4-octadecyloxybenzophenone, 2,2'-dihydroxy-4-methoxybenzophenone, and 2,2'-dihydroxy-4,4'-dimethoxybenzophenone;

benzotriazole-based ultraviolet absorbers such as 2-(2-hydroxy-5-methylphenyl)benzotriazole, 2-(2-hydroxy-5-tert-butylphenyl)benzotriazole, 2-(2-hydroxy-3,5-di-tert-butylphenyl)-5-chlorobenzotriazole, 2-(2-hydroxy-3,5-di-tert-butylphenyl)benzotriazole, 2-(2-hydroxy-5-tert-octylphenyl)benzotriazole, and 2-(2-hydroxy-5-(2-methacryloyloxyethyl)phenyl)-2H-benzotriazole;

hydroxyphenyl triazine-based ultraviolet absorbers such as 2-[4-[(2-hydroxy-3-dodecyloxypropyl)oxy]-2-hydroxyphenyl]-4,6-bis(2,4-dimethylphenyl)-1,3,5-triazine, 2-[4-[(2-hydroxy-3-tridecyloxypropyl)oxy]-2-hydroxyphenyl]-4,6-bis(2,4-dimethylphenyl)-1,3,5-triazine, 2-[4-[(2-hydroxy-3-(2'-ethyl)hexyl)oxy]-2-hydroxyphenyl]-4,6-bis(2,4-dimethylphenyl)-1,3,5-triazine, 2,4-bis(2-hydroxy-4-butyloxyphenyl)-6-(2,4-bis-butyloxyphenyl)-1,3,5-triazine, and 2-(2-hydroxy-4-[1-octhoxycarbonyl ethoxy]phenyl)-4,6-bis(4-phenylphenyl)-1,3,5-triazine; and

phenyl salicylate, p-tert-butylphenyl salicylate, p-(1,1,3,3-tetramethylbutyl)phenyl salicylate, 3-hydroxyphenyl benzoate, and phenylene-1,3-dibenzoate.

The ultraviolet absorber may be used alone or in combination of two or more kinds thereof.

Among these, from the viewpoint that the ultraviolet absorbing ability is sustained for a long period of time in the cured product, the ultraviolet absorber is preferably at least one selected from the group consisting of 2-[4-[(2-hydroxy-3-dodecyloxypropyl)oxy]-2-hydroxyphenyl]-4,6-bis(2,4-dimethylphenyl)-1,3,5-triazine, 2-[4-[(2-hydroxy-3-(2-ethyl)hexyl)oxy]-2-hydroxyphenyl]-4,6-bis(2,4-dimethylphenyl)-1,3,5-triazine, 2,4-bis(2-hydroxy-4-butyloxyphenyl)-6-(2,4-bis-butyloxyphenyl)-1,3,5-triazine, and 2-(2-hydroxy-4-[1-octyloxycarbonylethoxy]phenyl)-4,6-bis(4-phenylphenyl)-1,3,5-triazine.

Furthermore, from the viewpoint of preventing ultraviolet deterioration of the base material, a hydroxyphenyl triazine-based ultraviolet absorber having an absorbance of 1.0 or more at 350 nm is preferable. For example, at least one selected from the group consisting of 2-[4-[(2-hydroxy-3-(2-ethyl)hexyl)oxy]-2-hydroxyphenyl]-4,6-bis(2,4-dimethylphenyl)-1,3,5-triazine, 2,4-bis(2-hydroxy-4-butyloxyphenyl)-6-(2,4-bis-butyloxyphenyl)-1,3,5-triazine, or 2-(2-hydroxy-4-[1-octhylcarbonylethoxy]phenyl)-4,6-bis(4-phenylphenyl)-1,3,5-triazine is more preferable.

The absorbance is measured with a U-1900 type spectrophotometer manufactured by Hitachi, Ltd.

From the viewpoint of solubility and weather resistance with respect to the curable composition, the ultraviolet absorber is preferably a compound derived from at least one selected from the group consisting of benzophenone, benzotriazole, hydroxyphenyltriazine, phenyl salicylate, and phenyl benzoate; and among these compounds, a compound having a maximum absorption wavelength in a range of 240 to 380 nm is more preferable.

From the viewpoint that the ultraviolet absorber can be comprised in the curable composition in a large amount, as the ultraviolet absorber, a benzophenone-based ultraviolet absorber, a benzotriazole-based ultraviolet absorber, or a hydroxyphenyl triazine-based ultraviolet absorber is more preferable.

From the viewpoint that bleed-out is less likely to occur in the cured product, as the ultraviolet absorber, a benzotriazole-based ultraviolet absorber or a hydroxyphenyl triazine-based ultraviolet absorber is more preferable. The bleed-out is a phenomenon in which the ultraviolet absorber is precipitated on the surface of the cured product and the surface of the cured product is whitened.

From the viewpoint of preventing yellowing of the base material such as a polycarbonate resin, a hydroxyphenyl triazine-based ultraviolet absorber is still more preferable as the ultraviolet absorber.

The photopolymerization initiator is described below.

In one embodiment, when a curing reaction of the curable composition is carried out using ultraviolet rays, the curable composition preferably further comprises a photopolymerization initiator. When the curable composition comprises a photopolymerization initiator, the curable composition can be sufficiently cured by ultraviolet rays even in the presence of the ultraviolet absorber. However, in one embodiment, when the curable composition is cured with active energy ray (electron beam or the like) other than the ultraviolet rays, the photopolymerization initiator is not always necessary.

The photopolymerization initiator is not particularly limited as long as it is soluble in the curable composition and can initiate the polymerization of acrylic monomer or oligomer by the irradiation with ultraviolet rays.

Examples of the photopolymerization initiator include carbonyl compounds such as benzoin, benzoin methyl ether, benzoin ethyl ether, benzoin isopropyl ether, benzoin isobutyl ether, acetoin, butyroin, tolouin, benzyl, benzophenone, p-methoxybenzophenone, diethoxyacetophenone, 2,2-dimethoxy-2-phenylacetophenone, 2,2-dimethoxy-1,2-diphenylethan-1-one, methyl phenyl glyoxylate, ethyl phenyl glyoxylate, 4,4-bis(dimethylaminobenzophenone), 2-hydroxy-2-methyl-1-phenylpropan-1-one, 1-hydroxycyclohexyl phenyl ketone, and 1-(4-isopropylphenyl)-2-hydroxy-2-methylpropan-1 -one;

sulfur compounds such as tetramethylthiuram disulfide;
azo compounds such as azobisisobutyronitrile and azobis-2,4-dimethylvaleronitrile;
peroxide compounds such as benzoyl peroxide and di-tert-butyl peroxide; and
acylphosphine oxide compounds such as 2,4,6-trimethylbenzoyldiphenylphosphine oxide and bis(2,6-dimethoxybenzoyl)-2,4,4-trimethylpentylphosphine oxide.

Among these, from the viewpoint of polymerizability, the photopolymerization initiator is preferably benzophenone, methyl phenyl glyoxylate, 2-hydroxy-2-methyl-1-phenylpropan-1-one, 1-hydroxycyclohexyl phenyl ketone, 2,2-dimethoxy-1,2-diphenylethan-1-one, or 2,4,6-trimethylbenzoyldiphenylphosphine oxide.

The photopolymerization initiator may be used alone or in combination of two or more kinds thereof.

As the photopolymerization initiator, a photopolymerization initiator having an absorption maximal at a wavelength of 360 to 400 nm is preferable. With such a photopolymerization initiator, when the curable composition is cured with ultraviolet rays, radicals are generated by the ultraviolet rays, and a polymerizable compound (polymerizable monomer, polymerizable oligomer, or the like) can be efficiently polymerized even in the inside of the coating film. As a result, a cured product having excellent adhesiveness to the base material is easily obtained.

The organic solvent is described below.

The curable composition may comprise an organic solvent as the other components. When the curable

composition comprises an organic solvent, uniform solubility of components of the curable composition and dispersion stability thereof are easily improved. In addition, adhesiveness between the cured product and the base material, smoothness and uniformity of the cured product, and the like are also easily improved.

The type of the organic solvent is not particularly limited. Examples thereof include an alcohol, a hydrocarbon, a halogenated hydrocarbon, an ether, a ketone, an ester, and a polyhydric alcohol derivative.

The organic solvent may be used alone or in combination of two or more kinds thereof.

The additive is described below.

The curable composition may further comprise an additive as necessary. Examples of the additive include a light stabilizer, an antioxidant, an anti-yellowing agent, a bluing agent, a pigment, a leveling agent, an anti-foaming agent, a thickener, a sedimentation inhibitor, an antistatic agent, and an anti-fogging agent. However, the additive is not limited to these examples.

(Concentration of solid contents)

From the viewpoint of environmental load and spray coating properties, a concentration of solid contents of the curable composition is preferably 50% to 100% by mass, more preferably 60% to 95% by mass, and still more preferably 70% to 90% by mass.

The concentration of solid contents is a mass proportion of a residue (solid content) obtained by removing volatile components from the total mass of the curable composition. The concentration of solid contents is measured by a method specified in GB/T 34675-2017: Non-volatile Content Measurement Method. More specifically, the concentration of solid contents is obtained by the following procedure.

(1) an aluminum dish is placed in a dryer heated to 110°C for 30 minutes and cooled in a desiccator, and then weight: W is recorded.
(2) the curable composition is weighed in an amount of 0.2 ± 0.1 g, and weight: W1 is recorded.
(3) the sample is rapidly placed in a dryer heated to 50°C for 30 minutes, and then dried.
(4) after the heating is terminated, the curable composition is cured by a curing device while being placed on the aluminum dish.
(5) the cured product is placed in a dryer heated to 110°C for 60 minutes, and then dried.
(6) after cooling in the desiccator, remaining weight: W2 is recorded.
(7) the concentration of solid contents (NV) is calculated according to the following expression (α).

$$NV\ (\%\ \text{by mass}) = ((W2 - W)/(W1 - W)) \times 100\ \ldots\ \text{Expression}\ (\alpha)$$

(Viscosity (25°C))

A viscosity of the curable composition (25°C) is preferably 250 mPa·s or less, more preferably 150 mPa·s or less, and still more preferably 100 mPa·s or less. When the viscosity of the curable composition (25°C) is 250 mPa·s or less, the spray coating properties are improved even when the concentration of solid contents of the curable composition is relatively high such as 60% by mass or more.

In addition, from the viewpoint of preventing dripping of liquid after coating, the viscosity of the curable composition (25°C) is preferably 20 mPa·s or more.

The viscosity of the curable composition (25°C) is a value measured at 25°C using an E-type viscometer.

The components and amounts of the curable composition can be analyzed by analysis such as nuclear magnetic resonance (NMR) and infrared spectroscopy (IR). In addition, the components in the cured product can be analyzed by analysis such as a time-of-flight secondary ion mass spectrometry (TOF-SIMS), X-ray photoelectron spectroscopy (ESCA), fluorescent X-ray, and infrared spectroscopy (IR).

(Formulation)

A proportion of the compound A is preferably 1% to 50% by mass of the total mass of the compound A, the compound B, the compound B-1, the compound C, and the other monomers. When the proportion of the compound A is within the above-described numerical range, even after the durability test, the adhesiveness of the coating film to the base material is further improved. From the viewpoint of adhesiveness after the durability test, the proportion of the compound A is preferably 3% to 35% by mass, more preferably 5% to 30% by mass, still more preferably 6% to 25% by mass, and particularly preferably 7% to 25% by mass with respect to the total mass of the compound A, the compound B, the compound B-1, the compound C, and the other monomers.

A proportion of the compound B is preferably 5% to 80% by mass of the total mass of the compound A, the compound B, the compound B-1, the compound C, and the other monomers. When the proportion of the compound B is within the above-described numerical range, the abrasion resistance of the cured film is further improved. From the viewpoint of weather resistance (crack resistance) and heat resistance of the cured film, the proportion of the compound B is more preferably 10% to 70% by mass, still more preferably 20% to 65% by mass, particularly preferably 25% to 60% by mass, and most preferably 30% to 50% by mass with respect to the total mass of the compound A, the compound B, the compound B-1, the compound C, and the other monomers.

A proportion of the compound B-1 is preferably 0% to 70% by mass of the total mass of the compound A, the compound B, the compound B-1, the compound C, and the other monomers. When the proportion of the compound B-1 is within the above-described numerical range, the viscosity of the curable composition is likely to decrease, and the spray coating properties are likely to be improved. From the viewpoint of spray coating properties, the proportion of the compound B-1 is more preferably 1% to 50% by mass, still more preferably 5% to 40% by mass, particularly preferably 10% to 35% by mass, and most preferably 15% to 30% by mass with respect to the total mass of the compound A, the compound B, the compound B-1, the compound C, and the other monomers.

A proportion of the compound C is preferably 0% to 70% by mass of the total mass of the compound A, the compound B, the compound B-1, the compound C, and the other monomers. In a case where the proportion of the compound C is within the above-described numerical range, the weather resistance of the cured product and the adhesiveness after the durability test are further improved. In addition, the viscosity of the curable composition is likely to decrease, and the spray coating properties are further improved. From the viewpoint of suppressing the bleed-out of the ultraviolet absorber, the proportion of the compound C is more preferably 5% to 50% by mass, still more preferably 10% to 40% by mass, particularly preferably 13% to 35% by mass, and most preferably 15% to 30% by mass with respect to the total mass of the compound A, the compound B, the compound B-1, the compound C, and the other monomers.

A proportion of the ultraviolet absorber is preferably 0.05 to 20 parts by mass, more preferably 1 to 17 parts by mass, and still more preferably 5 to 15 parts by mass with respect to the total mass of the compound A, the compound B, the compound B-1, the compound C, and the other monomers.

When the proportion of the ultraviolet absorber is equal to or more than the above-described lower limit value, the weather resistance of the cured product of the curable composition is further improved. When the proportion of the ultraviolet absorber is equal to or less than the above-described upper limit value, the curing properties are further improved.

From the viewpoint of obtaining a sufficient degree of polymerization, a proportion of the photopolymerization initiator is preferably 0.05 to 25 parts by mass and more preferably 0.1 to 20 parts by mass with respect to the total mass of the compound A, the compound B, the compound B-1, the compound C, and the other monomers. From the viewpoint of curing properties, the proportion thereof is still more preferably 0.3 to 15 parts by mass.

(Production method)

The method for producing a curable composition according to the embodiment of the present invention comprising mixing, with the following compound B, the compound A selected as a compound in which a second Mohar index calculated by the following expression (L) is 3.65 to 9.17. In the mixing, various stirrers can be used. In addition, it is preferable to uniformly mix the compound A and the compound B.

In the mixing, the compound B-1, the compound C, the other monomers, and the other components may be further mixed as necessary.

Details and preferred aspects of the compound A, the compound B, the compound B-1, the compound C, the other monomers, and the other components are as described above.

In the selection of the compound A, it is preferable to calculate the second Mohar index using a computer.

(Application)

The curable composition according to the embodiment of the present invention has excellent hot water-resistant adhesiveness. In addition, the curable composition according to the embodiment has excellent spray coating properties and excellent heat moisture-resistant adhesiveness and the like. Therefore, the curable composition according to the embodiment can be suitably used for applications such as a hard coat for lamp lenses for automobiles, a hard coat for instruments, a hard coat for grills, and a hard coat for exteriors.

<Cured product>

The cured product according to the embodiment of the present invention is a cured product obtained by curing the above-described curable composition.

The cured product according to the embodiment of the present invention is obtained by curing the curable composition according to the embodiment of the present invention by irradiation with active energy ray such as ultraviolet rays. Examples of the active energy ray include ultraviolet rays, electron beams, X-rays, infrared rays, and visible rays.
In one embodiment, when the curable composition is cured by irradiation with ultraviolet rays, various ultraviolet irradiation devices can be used. As a light source of the ultraviolet irradiation device, a xenon lamp, a high-pressure mercury lamp, a metal halide lamp, an LED-UV lamp, or the like can be used. An irradiation amount of the ultraviolet rays is usually 10 to 10,000 $mJ/cm^2$, preferably 100 to 5,000 $mJ/cm^2$ and more preferably 150 to 3,000 $mJ/cm^2$.
In one embodiment, when the curable composition is cured by irradiation with electron beam, various electron beam irradiation devices can be used. An irradiation amount of the electron beam is usually 0.5 to 20 Mrad, preferably 1 to 15 Mrad.
In one embodiment, a temperature when curing the curable composition (temperature when irradiating the curable composition with active energy ray) may be appropriately set in consideration of heat resistance, thermal deformability, and the like of the base material. For example, the temperature is preferably 20°C to 200°C and more preferably 60°C to 150°C. A curing time is, for example, preferably 30 seconds to 1 hour and more preferably 1 minute to 15 minutes.
When the curable composition comprises the organic solvent, the curable composition may be dried before being irradiated with the active energy ray to volatilize the organic solvent.
A drying temperature may be appropriately set in consideration of heat resistance and thermal deformability of the base material, boiling point of the organic solvent, and the like. For example, the drying temperature is preferably 20°C to 200°C and more preferably 60°C to 150°C. A drying time is, for example, preferably 1 minute to 1 hour and more preferably 2 minutes to 15 minutes.

<Laminate>

The laminate according to the embodiment of the present invention comprises a base material and a layer formed of the cured product according to the embodiment of the present invention (hereinafter, also referred to as "cured product layer"). The cured product layer is laminated on or combined with the base material. In one embodiment, the cured product layer may be provided on a part of a surface of the base material, or may be provided on the entire surface of the base material.

(Base material)

A shape of the base material is not particularly limited. Examples thereof include a film shape, a plate shape, and a geometric shape, but any shape may be used.
Examples of a material of the base material include a metal such as galvanized steel, zinc alloy-plated steel, stainless steel, and tin-plated steel; and
plastics such as a poly(methyl methacrylate) resin, a polycarbonate resin, a polyester resin, a polystyrene resin, an ABS resin, an AS resin, a polyamide resin, a polyarylate resin, a polymethacrylimide resin, and a polyallyl diglycol carbonate resin.
As a material of these base materials, one kind of metal or plastic may be used alone, or two or more kinds thereof may be used in combination.
As the base material, a plastic base material is preferable from the viewpoint of providing the most usefulness (improvement of weather resistance and the like) to the cured product layer. Examples of the plastic base material include a plastic base material including at least one selected from the group consisting of a poly(methyl methacrylate) resin, a polycarbonate resin, a polystyrene resin, and a polymethyl imide resin.
Among these, from the viewpoint of transparency and moldability, a poly(methyl methacrylate) resin or a polycarbonate resin is preferable. Furthermore, from the viewpoint of heat resistance and impact resistance, a polycarbonate resin is more preferable.
From the viewpoint of weather resistance and viewpoint of reducing cracks, a thickness of the cured product layer is preferably 3 to 50 μm. The thickness of the cured product layer can be adjusted depending on a thickness of the coating film of the curable composition to be applied to the base material.
In one embodiment, the laminate may comprise a plurality of base materials. In addition, in one embodiment, the laminate may comprise a plurality of cured product layers.
For example, a plurality of kinds of cured product layers may be laminated on the base material. In addition, a plurality of base materials and a plurality of cured product layers may be laminated. When the base material has a film shape or a plate shape, the cured product layer may be laminated on one surface of the base material, or the cured product layer may be laminated on both surfaces of the base material.
The laminate can be produced by coating a surface of the base material with the curable composition and then

curing the curable composition to form a cured product.

In one embodiment, the laminate can be produced, for example, by coating the base material with the curable composition according to the embodiment of the present invention to form a coating film, and then irradiating the coating film with active energy ray to cure the coating film.

A coating method is not particularly limited. Various methods can be used. Examples thereof include a method such as brush coating, bar coating, spray coating, dip coating, spin coating, and curtain coating, but the present invention is not limited thereto.

Since the curable composition according to the embodiment of the present invention is likely to have a viscosity suitable for spray coating, a spray coating method is preferable as the coating method.

The coating film can be cured in the same manner as the curable composition described above.

[Examples]

The present invention is described below in more detail with reference to Examples, but the present invention is not limited by the following description. "Part" in Examples represents "part by mass".

<Raw materials and abbreviations>

Raw materials used and abbreviations thereof are as follows.

(Compound A)

· CP-EA: caprolactone-modified (1 mol) ethyl acrylate ($(TI)_2$: 5.44, Mw: 214.3)
· BCA: butyl carbitol acetate ($(TI)_2$: 5.59, Mw: 204.3)
· MTG-A: methoxy-triethylene glycol acrylate ($(TI)_2$: 5.86, Mw: 218.2)
· BTG-A: butoxy-triethylene glycol acrylate ($(TI)_2$: 7.14, Mw: 260.3)
· ABEC: 4-acryloyloxybutylethyl carbonate ($(TI)_2$: 5.14, Mw: 216.2)
· ABBC: 4-acryloyloxybutylbutyl carbonate ($(TI)_2$: 6.09, Mw: 244.3)
· C4DA: 1,4-butanediol diacrylate ($(TI)_2$: 5.15, Mw: 198.2)
· C6DA: 1,6-hexanediol diacrylate ($(TI)_2$: 6.07, Mw: 226.3)
· C9DA: 1,9-nonanediol diacrylate ($(TI)_2$: 7.40, Mw: 268.3)
· DCPDA: tricyclodecane dimethanol diacrylate ($(TI)_2$: 3.98, Mw: 304.4)

(Compound B)

· TMPTA: trimethylolpropane triacrylate (product name: VISCOAT #295, manufactured by Osaka Organic Chemical Industry Ltd.)
· M-315: Mixture of EO-modified diacrylate isocyanurate and EO-modified triacrylate isocyanurate (product name: ARONIX M-315, manufactured by TOAGOSEI CO., LTD.)
· DPCA-20: dipentaerythritol caprolactone acrylate (product name: KAYARAD DPCA-20, manufactured by Nippon Kayaku Co., Ltd.)

<Compound B-1>

· CN2303: acrylate having a hyperbranched structure (manufactured by Sartomer), number of (meth)acryloyl-functional groups: 6, viscosity (25°C): 375 mPa·s
· CN2304: acrylate having a hyperbranched structure (manufactured by Sartomer), number of (meth)acryloyl-functional groups: 18, viscosity (25°C): 750 mPa·s

(Compound C)

· C1-1: polyfunctional urethane acrylate having an acryloyl group, obtained in Synthesis Example 1 below, number of (meth)acryloyl-functional groups: 2, mass-average molecular weight (Mw): 4,100
· C1-2: polyfunctional urethane acrylate having an acryloyl group, obtained in Synthesis Example 2 below, number of (meth)acryloyl-functional groups: 2, mass-average molecular weight (Mw): 3,600

(Synthesis Example 1: Synthesis of C1-1)

530 parts of dicyclohexylmethane diisocyanate and 300 ppm of dibutyltin dilaurate were charged into a flask equipped with a dropping funnel with a heat insulation function, a reflux condenser, a stirrer, and a thermometer, and the mixture was heated to 50°C. Thereafter, 700 parts (1 mol) of KURARAY POLYOL C-770 manufactured by KURARAY CO., LTD. as a polyol compound was added dropwise thereto over 2 hours. After stirring at 50°C for 2 hours, the temperature was raised to 70°C over 1 hour. Thereafter, 239 parts of 2-hydroxyethyl acrylate was added dropwise thereto over 2 hours, and the mixture was further stirred for 2 hours to obtain a urethane acrylate C1-1.

(Synthesis Example 2: Synthesis of Cl-2)

530 parts of dicyclohexylmethane diisocyanate and 300 ppm of dibutyltin dilaurate were charged into a flask equipped with a stirrer, a reflux condenser, a dropping funnel, and a thermometer, and the mixture was heated to 50°C. Thereafter, 441 parts of PTG-850SN manufactured by Hodogaya Chemical Co., Ltd. and 69 parts of 4-hydroxy-N-(2-hydroxyethyl)-N-methylbutanamide as a polyol compound were added dropwise thereto over 2 hours. After stirring at 50°C for 2 hours, the temperature was raised to 70°C over 1 hour. Thereafter, 262 parts of 2-hydroxyethyl acrylate was added dropwise thereto over 2 hours, and the mixture was further stirred for 2 hours to obtain a urethane acrylate C1-2.

(Other monomers)

· 4-HBA: 4-hydroxybutyl acrylate ($(TI)_2$: 3.64, Mw: 144.2)
· ISTA: isostearyl acrylate ($(TI)_2$: 9.18, Mw: 324.5)
· CTFA: cyclic trimethylolpropane formal acrylate ($(TI)_2$: 2.98, Mw: 200.2)
· UM-90DA: polycarbonate diol diacrylate (manufactured by UBE Corporation, $(TI)_2$: 13.70, Mw: 736.9)
· 2-EHA: 2-ethylhexyl acrylate ($(TI)_2$: 3.56, Mw: 184.3)

(Other components)

· Tinuvin 400 (ultraviolet absorber): mixture of 2-[4-[(2-hydroxy-3-dodecyloxypropyl)oxy]-2-hydroxyphenyl]-4,6-bis-(2,4-dimethylphenyl)-1,3,5-triazine, 2-[4-[(2-hydroxy-3-tridecyloxypropyl)oxy]-2-hydroxyphenyl]-4,6-bis-(2,4-dimethylphenyl)-1,3,5-triazine, and 1-methoxy-2-propanol (manufactured by BASF)
· Tinuvin 405 (ultraviolet absorber): 2-[4-[(2-hydroxy-3-(2'-ethyl)hexyl)oxy]-2-hydroxyphenyl]-4,6-bis-(2,4-dimethylphenyl)-1,3,5-triazine (manufactured by BASF)
·Tinuvin 479 (ultraviolet absorber): structure undisclosed (manufactured by BASF)
· Omnirad TPO (photopolymerization initiator): 2,4,6-trimethylbenzoyldiphenylphosphine oxide
· Omnirad 184 (photopolymerization initiator): 1-hydroxycyclohexyl phenylketone

(Others)

· Tinuvin 123 (light stabilizer): reaction product of decanedioic acid bis(2,2,6,6-tetramethyl-1-(octyloxy)-4-piperidinyl) ester, 1,1-dimethylethyl hydroperoxide, and octane (manufactured by BASF)
· BYK-333 (silicone-based leveling agent): polyether-modified polydimethylsiloxane (manufactured by BYK Chemie)

· PGM (organic solvent): propylene glycol monomethyl ether

<Measurement method>

Evaluation methods of physical property values were as follows.

$(TI)_2$: the second Mohar index was obtained by calculating the second smallest value $\chi_2$ among eigenvalues of the Laplacian matrix, which was obtained by determining a Laplacian matrix when each compound was described in the graph theory using a calculation site (https://keisan.casio.jp/exec/system/1505174268) or a spreadsheet software; thereafter, $(TI)_2$: the second Mohar index was obtained from the following expression (L).

$$(TI)_2 = 4/(N \times \chi_2) \text{ ... Expression (L)}$$

In the expression (L), N is the number of atoms in a skeleton of the compound.

(Viscosity of compound B-1 (25°C))

The viscosity of the compound B-1 (25°C) was measured using an E-type viscometer TVE-20H (manufactured by Toki Sangyo Co., Ltd.).

(Viscosity of curable composition (25°C))

The viscosity (25°C) of the curable composition was measured using an E-type viscometer TVE-20H (manufactured by Toki Sangyo Co., Ltd.) after diluting the curable composition with PGM such that the concentration of solid contents was the concentration shown in Table 3.

(Mass-average molecular weight (Mw))

The mass-average molecular weight (Mw) of the polymer (such as the compound C) was a molecular weight in terms of standard polystyrene, which was measured by a gel permeation chromatography method (GPC method) under the following conditions.

Device: High-speed GPC device HLC-8320GPC type manufactured by Tosoh Corporation
Ultraviolet (UV) detector: UV-8320 type manufactured by Tosoh Corporation
Flow rate: 0.35 mL/min
Injection port temperature: 40°C
Oven temperature: 40°C
Differential refractometer (RI) temperature: 40°C
UV wavelength: 254 nm
Sample injection amount: 10 μL
Column: three columns were connected in the following order of (1), (2), and (3)

(1) TSKgel super HZM-M (4.6 mm ID × 15 cm L) manufactured by Tosoh Corporation
(2) TSKgel super HZM-M (4.6 mm ID × 15 cm L) manufactured by Tosoh Corporation
(3) TSKgel HZ2000 manufactured by Tosoh Corporation (4.6 mm ID × 15 cm L)

Guard column: TSK guard column Super HZ-L (4.6 mm ID × 3.5 cm L) manufactured by Tosoh Corporation
Solvent: THF (stabilizer BHT);
the sample concentration was adjusted such that the resin content was 0.2% by mass.

<Evaluation method>

(Production of evaluation sample)

The curable composition was applied onto a polycarbonate resin injection molded plate (Panlite L-1225Z-100 (product name), manufactured by TEIJIN LIMITED, 3 mm-thick) by spray coating or coating using a bar coater (#14). The curable composition was heated and dried in an infrared (IR) dryer at 70°C for 240 seconds to form a coating film. Next, the formed coating film was cured by irradiating the coating film with ultraviolet rays in an air atmosphere using a high-pressure

mercury lamp such that the irradiation amount was 2,000 mJ/cm$^2$ (wavelength: 340 to 380 nm) with an ultraviolet light meter UV-351 manufactured by ORC MANUFACTURING CO., LTD., thereby forming a cured product layer. A thickness of the cured product layer was 9 μm. In this manner, a laminate comprising the polycarbonate resin injection molded plate and the cured product layer was obtained. The obtained laminate was subjected to the following evaluations as an evaluation sample.

(Hot water-resistant adhesiveness)

Using a constant temperature water tank, the evaluation sample was immersed in hot water at 80°C, and an appearance change of the evaluation sample after 8 hours was visually confirmed. Thereafter, cross cuts reaching the base material at intervals of 1 mm were made in the cured coating film on the sample to form 100 squares of 1 mm$^2$. A cellophane tape (manufactured by Nichiban Co., Ltd., product name: CELLOTAPE) was attached to the surface of the cured coating film in which the cross cuts were made, and then rapidly peeled off. At this time, the number of peeled squares was counted. A determination standard of the hot water-resistant adhesiveness is as follows.

· Determination standard (square adhesion test)

5B (best): no peeling
4B (good): fine peeling was observed in the cut portion or the like, but no peeling was observed in the grid
3B (possible): half or less of the grids were peeled off
2B (defective): half or more of the grids were peeled off
1B (impossible): all of the grids in the coating film were peeled off

(Heat moisture-resistant adhesiveness)

Using a constant temperature and humidity tank, the evaluation sample was placed in an environment of 70°C and 95 %RH, and an appearance change of the evaluation sample after 240 hours was visually confirmed. The heat moisture-resistant adhesiveness was evaluated by the same method as that for evaluating the hot water-resistant adhesiveness described above. A determination standard of the heat moisture-resistant adhesiveness is as follows.

· Determination standard (square adhesion test)

5B (best): no peeling
4B (good): fine peeling was observed in the cut portion or the like, but no peeling was observed in the grid
3B (possible): half or less of the grids were peeled off
2B (defective): half or more of the grids were peeled off
1B (impossible): all of the grids in the coating film were peeled off

(Pencil hardness)

The evaluation of the pencil hardness was carried out in accordance with JIS K 5600-5-4. A pencil of various hardnesses was applied to the surface of the evaluation sample at an angle of 45°, and a scratch test was performed by applying a load. A hardness of the hardest pencil which did not cause a scratch was defined as the pencil hardness.

(Spray coating properties)

The appearance of the evaluation sample was visually confirmed, and spray coating properties at 25°C and 50 % RH were evaluated. A determination standard of the spray coating properties is as follows.

· Determination standard

A (good): no wrinkles or whitened portions were observed on the surface of the evaluation sample

B (possible): wrinkles or whitened portions were observed on the surface of the evaluation sample
C (impossible): since the viscosity of the curable composition was too high to perform spray coating, bar coating was carried out

<Example 1>

6.0 parts of the CP-EA, 1.0 part of the 2-EHA, 10.0 parts of the DPCA-20, 6.0 parts of the CN2304, 4.0 parts of the C1-1, 3.0 parts of the C1-2, 3.0 parts of Tinuvin 400, 0.5 parts of Tinuvin 479, 1.6 parts of Omnirad TPO, 1.6 parts of Omnirad 184, 0.3 parts of Tinuvin 123, and 0.04 parts of BYK-333 were uniformly mixed. Thereafter, PGM was used as a diluent solvent, and the concentration of solid contents was adjusted to the concentration shown in Table 3 to obtain a curable composition. An evaluation sample was produced using the obtained curable composition. The obtained curable composition and the evaluation results of the evaluation sample are shown in Table 3.

<Examples 2 to 12 and Comparative Examples 1 to 5>

A curable composition was prepared by the same method as in Example 1, except that the formulation of the curable composition was as shown in Tables 1 and 2, thereby producing an evaluation sample. The obtained curable composition and the evaluation results of the evaluation sample are shown in Table 3. The numerical value of the formulation of the curable composition shown in Tables 1 and 2 is expressed in terms of the number of grams (g).

[Table 1]

| | Raw material | Classification | $(TI)_2$ | Mw | Number of functional groups | Example 1 | Example 2 | Example 3 | Example 4 | Example 5 | Example 6 | Example 7 | Example 8 | Example 9 |
|---|---|---|---|---|---|---|---|---|---|---|---|---|---|---|
| Compound A | CP-EA | Monofunctional acrylate | 5.44 | 214.3 | 1 | 20.0 | - | - | - | - | - | - | - | - |
| | BCA | Solvent | 5.59 | 204.3 | 0 | - | 7.9 | - | - | - | - | - | - | - |
| | MTG-A | Monofunctional acrylate | 5.86 | 218.2 | 1 | - | - | 15.6 | 15.6 | 15.6 | - | - | - | - |
| | BTG-A | Monofunctional acrylate | 7.14 | 260.3 | 1 | - | - | - | - | - | 20.0 | - | - | - |
| | ABEC | Monofunctional acrylate | 5.14 | 216.2 | 1 | - | - | - | - | - | - | 20.0 | - | - |
| | ABBC | Monofunctional acrylate | 6.09 | 244.3 | 1 | - | - | - | - | - | - | - | 18.8 | - |
| | C4DA | Bifunctional acrylate | 5.15 | 198.2 | 2 | - | - | - | - | - | - | - | - | 16.4 |
| | C6DA | Bifunctional acrylate | 6.07 | 226.3 | 2 | - | - | - | - | - | - | - | - | - |
| | C9DA | Bifunctional acrylate | 7.40 | 268.3 | 2 | - | - | - | - | - | - | - | - | - |
| | DCPDA | Bifunctional acrylate | 3.98 | 304.4 | 2 | - | - | - | - | - | - | - | - | - |
| Compound B | TMPTA | Polyfunctional acrylate | - | - | 3 | - | - | - | 34.4 | - | - | - | - | - |
| | M-315 | Polyfunctional acrylate | - | - | 3 | - | - | - | - | 34.4 | - | - | - | - |
| | DPCA-20 | Polyfunctional acrylate | - | - | 6 | 33.3 | 33.3 | 34.4 | - | - | 33.3 | 33.3 | 37.5 | 36.4 |
| Compound B-1 | CN2303 | Hyperbranched polyacrylate | - | - | 6 | - | 20.6 | 21.9 | 21.9 | 21.9 | - | 20.0 | 12.5 | 21.8 |
| | CN2304 | Hyperbranched polyacrylate | - | - | 18 | 20.0 | - | - | - | - | 20.0 | - | 12.5 | - |

(continued)

| | Raw material | Classification | $(TI)_2$ | Mw | Number of functional groups | Example 1 | Example 2 | Example 3 | Example 4 | Example 5 | Example 6 | Example 7 | Example 8 | Example 9 |
|---|---|---|---|---|---|---|---|---|---|---|---|---|---|---|
| Compound C | C1-1 | Urethane acrylate oligomer | - | 4100 | 2 | 13.3 | 14.3 | 14.1 | 14.1 | 14.1 | 13.3 | 13.3 | 18.8 | 14.5 |
| | C1-2 | Urethane acrylate oligomer | - | 3600 | 2 | 10.0 | 10.8 | 10.6 | 10.6 | 10.6 | 10.0 | 10.0 | - | 8.0 |
| Other monomers | 4-HBA | Monofunctional acrylate | 3.64 | 144.2 | 1 | - | - | - | - | - | - | - | - | - |
| | ISTA | Monofunctional acrylate | 9.18 | 324.5 | 1 | - | 9.5 | - | - | - | - | - | - | - |
| | CTFA | Monofunctional acrylate | 2.98 | 200.2 | 1 | - | - | - | - | - | - | - | - | - |
| | UM-90DA | Bifunctional acrylate | 13.70 | 736.9 | 2 | - | - | - | - | - | - | - | - | - |
| | 2-EHA | Monofunctional acrylate | 3.56 | 184.3 | 1 | 3.3 | 3.5 | 3.4 | 3.4 | 3.4 | 3.3 | 3.3 | - | 2.9 |
| Other components | Tinuvin 400 | Ultraviolet absorber | - | - | - | 10.0 | 7.7 | - | - | - | 10.0 | 10.0 | | 8.8 |
| | Tinuvin 405 | Ultraviolet absorber | - | - | - | - | - | 9.4 | 9.4 | 9.4 | - | - | 8.6 | - |
| | Tinuvin 479 | Ultraviolet absorber | - | - | - | 1.7 | 1.6 | - | - | - | - | 1.7 | 0.8 | 1.8 |
| | Omnirad TPO | Photopolymerization initiator | - | - | - | 5.3 | 5.1 | 5.0 | 5.0 | 5.0 | 5.3 | 5.3 | 4.7 | 5.8 |
| | Omnirad 184 | Photopolymerization initiator | - | - | - | 5.3 | 5.1 | 5.0 | 5.0 | 5.0 | 5.3 | 5.3 | 3.1 | 5.8 |
| | Tinuvin 123 | Additive | - | - | - | 1.0 | 1.0 | 0.9 | 0.9 | 0.9 | 1.0 | 1.0 | 0.9 | 0.5 |
| | BYK-333 | Additive | - | - | - | 0.1 | 0.1 | 0.1 | 0.1 | 0.1 | 0.1 | 0.1 | 0.1 | 0.1 |
| | PGM | Organic solvent | - | - | - | 23.3 | 22.2 | 21.9 | 21.9 | 21.9 | 23.3 | 23.3 | 31.3 | 25.5 |

[Table 2]

| | Raw material | Classification | $(TI)_2$ | Mw | Number of functional groups | Example 10 | Example 11 | Example 12 | Comparative Example 1 | Comparative Example 2 | Comparative Example 3 | Comparative Example 4 | Comparative Example 5 |
|---|---|---|---|---|---|---|---|---|---|---|---|---|---|
| Compound A | CP-EA | Monofunctional acrylate | 5.44 | 214.3 | 1 | - | - | - | - | - | - | - | 18.3 |
| | BCA | Solvent | 5.59 | 204.3 | 0 | - | - | - | - | - | - | - | - |
| | MTG-A | Monofunctional acrylate | 5.86 | 218.2 | 1 | - | - | - | - | - | - | - | - |
| | BTG-A | Monofunctional acrylate | 7.14 | 260.3 | 1 | - | - | - | - | - | - | - | - |
| | ABEC | Monofunctional acrylate | 5.14 | 216.2 | 1 | - | - | - | - | - | - | - | - |
| | ABBC | Monofunctional acrylate | 6.09 | 244.3 | 1 | - | - | - | - | - | - | - | - |
| | C4DA | Bifunctional acrylate | 5.15 | 198.2 | 2 | - | - | - | - | - | - | - | - |
| | C6DA | Bifunctional acrylate | 6.07 | 226.3 | 2 | 11.1 | - | - | - | - | - | - | - |
| | C9DA | Bifunctional acrylate | 7.40 | 268.3 | 2 | - | 20.7 | - | - | - | - | - | - |
| | DCPDA | Bifunctional acrylate | 3.98 | 304.4 | 2 | - | - | 20.0 | - | - | - | - | - |
| Compound B | TMPTA | Polyfunctional acrylate | - | - | 3 | - | - | - | - | - | - | - | - |
| | M-315 | Polyfunctional acrylate | - | - | 3 | - | - | - | - | - | - | - | - |
| | DPCA-20 | Polyfunctional acrylate | - | - | 6 | 37.0 | 34.5 | 33.3 | 33.3 | 35.5 | 33.9 | - | - |

(continued)

| | Raw material | Classification | $(TI)_2$ | Mw | Number of functional groups | Example 10 | Example 11 | Example 12 | Comparative Example 1 | Comparative Example 2 | Comparative Example 3 | Comparative Example 4 | Comparative Example 5 |
|---|---|---|---|---|---|---|---|---|---|---|---|---|---|
| Compound B-1 | CN2303 | Hyperbranched polyacrylate | - | - | 6 | - | 20.7 | - | - | - | 20.3 | 51.6 | - |
| | CN2304 | Hyperbranched polyacrylate | - | - | 18 | 22.2 | | 20.0 | 20.0 | 19.4 | - | - | - |
| Compound C | C1-1 | Urethane acrylate oligomer | - | 4100 | 2 | 14.8 | 13.8 | 13.3 | 13.3 | 12.9 | 10.2 | 12.9 | 36.7 |
| | C1-2 | Urethane acrylate oligomer | - | 3600 | 2 | 11.1 | 7.6 | 10.0 | 10.0 | 9.7 | 10.2 | 7.1 | 33.6 |
| Other monomers | 4-HBA | Monofunctional acrylate | 3.64 | 144.2 | 1 | - | - | - | 20.0 | - | 6.8 | - | - |
| | ISTA | Monofunctional acrylate | 9.18 | 324.5 | 1 | - | - | - | - | 19.4 | - | - | - |
| | CTFA | Monofunctional acrylate | 2.98 | 200.2 | 1 | - | - | - | - | - | 15.3 | - | - |
| | UM-90DA | Bifunctional acrylate | 13.70 | 736.9 | 2 | - | - | - | - | - | - | 25.8 | - |
| | 2-EHA | Monofunctional acrylate | 3.56 | 184.3 | 1 | 3.7 | 2.8 | 3.3 | 3.3 | 3.2 | 3.4 | 2.6 | 11.3 |

(continued)

| | Raw material | Classification | $(TI)_2$ | Mw | Number of functional groups | Example 10 | Example 11 | Example 12 | Comparative Example 1 | Comparative Example 2 | Comparative Example 3 | Comparative Example 4 | Comparative Example 5 |
|---|---|---|---|---|---|---|---|---|---|---|---|---|---|
| Other components | Tinuvin 400 | Ultraviolet absorber | - | - | - | 11.1 | 8.3 | 10.0 | 10.0 | 9.7 | 8.2 | 7.8 | - |
| | Tinuvin 405 | Ultraviolet absorber | - | - | - | - | - | - | - | - | - | - | 8.4 |
| | Tinuvin 479 | Ultraviolet absorber | - | - | - | 1.9 | 1.7 | 1.7 | 1.7 | 1.6 | 1.7 | 1.6 | 0.8 |
| | Omnirad TPO | Photopolymerization initiator | - | - | - | 5.9 | 5.5 | 5.3 | 5.3 | 5.2 | 5.4 | 5.2 | 4.9 |
| | Omnirad 184 | Photopolymerization initiator | - | - | - | 5.9 | 5.5 | 5.3 | 5.3 | 5.2 | 5.4 | 5.2 | 4.9 |
| | Tinuvin 123 | Additive | - | - | - | 1.1 | 1.0 | 1.0 | 1.0 | 1.0 | 0.5 | 0.5 | 0.9 |
| | BYK-333 | Additive | - | - | - | 0.1 | 0.1 | 0.1 | 0.1 | 0.1 | 0.1 | 0.1 | 0.1 |
| | PGM | Organic solvent | - | - | - | 25.9 | 24.1 | 23.3 | 23.3 | 22.6 | 23.7 | 22.6 | 27.5 |

[Table 3]

| | Viscosity (25°C) [mPa·s] | Concentration of solid contents [% by mass] | Hot water-resistant adhesiveness | Heat moisture-resistant adhesiveness | Pencil hardness | Spray coating properties |
|---|---|---|---|---|---|---|
| Example 1 | 102 | 84 | 5B | 5B | HB | A |
| Example 2 | 114 | 79 | 5B | 5B | HB | A |
| Example 3 | 103 | 85 | 5B | 5B | B | A |
| Example 4 | 68 | 85 | 5B | 5B | HB | A |
| Example 5 | 111 | 85 | 5B | 5B | HB | A |
| Example 6 | 101 | 84 | 5B | 5B | HB | A |
| Example 7 | 95 | 84 | 5B | 5B | HB | A |
| Example 8 | 91 | 81 | 5B | 5B | HB | A |
| Example 9 | 82 | 83 | 5B | 4B | B | B |
| Example 10 | 147 | 84 | 5B | 1B | HB | A |
| Example 11 | 116 | 84 | 5B | 1B | HB | B |
| Example 12 | 179 | 84 | 3B | 1B | HB | B |
| Comparative Example 1 | 119 | 84 | 1B | 1B | HB | A |
| Comparative Example 2 | 122 | 84 | 1B | 1B | HB | A |
| Comparative Example 3 | 98 | 84 | 1B | 1B | B | A |
| Comparative Example 4 | 188 | 83 | 1B | 1B | B | C |
| Comparative Example 5 | 176 | 81 | 1B | 1B | 2B | A |

As shown in Table 3, in Examples 1 to 12, the coating film of the cured product having excellent hot water-resistant adhesiveness was obtained. In addition, the curable compositions of Examples 1 to 12 had sufficient spray coating properties in practical use. In addition, in Examples 1 to 8, the coating film of the cured product having excellent heat moisture-resistant adhesiveness in addition to the hot water-resistant adhesiveness was obtained.
On the other hand, in the compositions of Comparative Examples 1 to 4 not comprising the compound A and the composition of Comparative Example 5 not comprising the compound B, the coating film of the cured product had deteriorated hot water-resistant adhesiveness, and also had deteriorated heat moisture-resistant adhesiveness. In addition, in the composition of Comparative Example 5 not comprising the compound B, the coating film of the cured product had a result of deteriorated pencil hardness.

[Industrial Applicability]

With the curable composition according to the embodiment of the present invention, a coating film having excellent hot water-resistant adhesiveness can be obtained.
The cured product according to the embodiment of the present invention has excellent hot water-resistant adhesiveness.
The laminate according to the embodiment of the present invention comprises a layer formed of a cured product having excellent hot water-resistant adhesiveness.
With the method for producing a curable composition according to the embodiment of the present invention, a curable composition having excellent hot water-resistant adhesiveness as a coating film can be obtained.
With the method for producing a cured product according to the embodiment of the present invention, a cured product having excellent hot water-resistant adhesiveness can be obtained.
With the method for producing a laminate according to the embodiment of the present invention, a laminate

comprising a layer formed of a cured product having excellent hot water-resistant adhesiveness can be obtained.

## Claims

1. A curable composition comprising:

   the following compound A; and
   the following compound B,
   compound A: a compound in which a second Mohar index calculated by the following expression (L) is 3.65 to 9.17 (excluding the compound B),
   compound B: a polyfunctional (meth)acrylate monomer having three or more (meth)acryloyl groups,

$$(TI)_2 = 4/(N \times \chi_2) \text{ ... expression (L),}$$

   in the expression (L), $(TI)_2$ is the second Mohar index,
   N is a number of atoms in a skeleton of the compound A, excluding hydrogen atoms,
   $\chi_2$ is a second smallest value among eigenvalues of a Laplacian matrix representing a molecular structure of the compound A,
   the Laplacian matrix is a square matrix with N rows and N columns,
   a value of a k-th diagonal component (k, k) from the left in the Laplacian matrix is a number of atoms bonded to a k-th atom $Z_k$ in the skeleton of the compound A, excluding hydrogen atoms,
   a value of each column of a k-th component (k, j) in a component (i, j) of an i row and a j column of a non-diagonal component in the Laplacian matrix is -1 when a j-th atom $Z_j$ in the skeleton of the compound A, excluding the hydrogen atoms, is bonded to the atom $Z_k$, and is 0 when the atom $Z_j$ is not bonded to the atom $Z_k$,
   a component sum of each row and a component sum of each column in the Laplacian matrix are 0,
   N is an integer of 2 or more,
   i, j, and k are an integer of 1 to N, and
   i and j are different from each other.

2. The curable composition according to Claim 1, further comprising:

   the following compound B-1,
   compound B-1: (meth)acrylate which has at least one selected from the group consisting of a dendrimer structure and a hyperbranched structure (excluding the compound B).

3. The curable composition according to Claim 1,
   wherein a viscosity of the curable composition at 25°C is 250 mPa’s or less.

4. A cured product of the curable composition according to any one of Claims 1 to 3.

5. A laminate comprising:

   a base material; and
   a layer formed of the cured product according to Claim 4.

6. The laminate according to Claim 5,
   wherein the base material is a plastic base material.

7. A method for producing a curable composition, comprising:

   mixing, with the following compound B, a compound A selected as a compound in which a second Mohar index calculated by the following expression (L) is 3.65 to 9.17 (excluding the compound B),
   compound B: a polyfunctional (meth)acrylate monomer having three or more (meth)acryloyl groups,

$$(TI)_2 = 4/(N \times \chi_2) \text{ ... expression (L),}$$

in the expression (L), $(TI)_2$ is the second Mohar index,
N is a number of atoms in a skeleton of the compound A, excluding hydrogen atoms,
$\chi_2$ is a second smallest value among eigenvalues of a Laplacian matrix representing a molecular structure of the compound A,
the Laplacian matrix is a square matrix with N rows and N columns,
a value of a k-th diagonal component (k, k) from the left in the Laplacian matrix is a number of atoms bonded to a k-th atom $Z_k$ in the skeleton of the compound A, excluding hydrogen atoms,
a value of each column of a k-th component (k, j) in a component (i, j) of an i row and a j column of a non-diagonal component in the Laplacian matrix is -1 when a j-th atom $Z_j$ in the skeleton of the compound A, excluding the hydrogen atoms, is bonded to the atom $Z_k$, and is 0 when the atom $Z_j$ is not bonded to the atom $Z_k$,
a component sum of each row and a component sum of each column in the Laplacian matrix are 0,
N is an integer of 2 or more,
i, j, and k are an integer of 1 to N, and
i and j are different from each other.

**8.** The production method according to Claim 7, further comprising:

mixing the following compound B-1,
compound B-1: (meth)acrylate which has at least one selected from the group consisting of a dendrimer structure and a hyperbranched structure (excluding the compound B).

**9.** A method for producing a cured product, comprising:
curing a curable composition obtained by the production method according to Claim 7 or 8.

**10.** A method for producing a laminate which comprises a base material and a layer formed of a cured product, comprising:
curing a curable composition obtained by the production method according to Claim 7 or 8 to obtain the cured product.

**11.** The production method according to Claim 10,
wherein the base material is a plastic base material.

**INTERNATIONAL SEARCH REPORT**

International application No. **PCT/JP2022/045651**

**A. CLASSIFICATION OF SUBJECT MATTER**

***C08F 220/10***(2006.01)i; ***B32B 27/30***(2006.01)i
FI: C08F220/10; B32B27/30 A

According to International Patent Classification (IPC) or to both national classification and IPC

**B. FIELDS SEARCHED**

Minimum documentation searched (classification system followed by classification symbols)

C08F220/10; B32B27/30

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2012-184348 A (TEIJIN CHEM. LTD.) 27 September 2012 (2012-09-27) claims, paragraphs [0001], [0006], [0019], [0020], [0021], [0025], [0026], [0038]-[0052], [0054], [0062]-[0072] | 1-11 |
| X | JP 2017-105877 A (DIC CORP.) 15 June 2017 (2017-06-15) claims, paragraphs [0016], [0017], [0025]-[0030], [0033], [0034], [0037]-[0048], [0066]-[0068], [0073]-[0095] | 1-11 |
| X | WO 2015/104972 A1 (DIC CORP.) 16 July 2015 (2015-07-16) claims, paragraphs [0018]-[0037], [0045]-[0054] | 1-11 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **09 February 2023** | **21 February 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2022/045651**

| Patent document cited in search report | Publication date (day/month/year) | Patent family member(s) | Publication date (day/month/year) |
|---|---|---|---|
| JP 2012-184348 A | 27 September 2012 | (Family: none) | |
| JP 2017-105877 A | 15 June 2017 | (Family: none) | |
| WO 2015/104972 A1 | 16 July 2015 | US 2016/0333215 A1<br>claims, paragraphs [0024]-[0048], [0072]-[0114] | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2022020653 A
- JP H09302268 A
- JP H107939 A
- JP 2017008200 A
- JP 2016190998 A


### Non-patent literature cited in the description


- The Laplacian Matrix in Chemistry. **NENAD TRINAJSTIC**. Journal of Chemical Information and Computer Sciences. American Chemical Society, 1994, vol. 34, 368-376